# EUROPEAN PATENT SPECIFICATION

(11) **EP 2 992 433 B1**
(45) Date of publication and mention of the grant of the patent: **14.06.2017**
(21) Application number: 14791724.9
(22) Date of filing: 28.04.2014
(51) Int. Cl.: H04L 12/18, H04L 29/08, H04N 21/258, H04N 7/15, H04M 3/56

(54) **COMMUNICATIONS MANAGEMENT SYSTEM AND COMMUNICATIONS MANAGEMENT METHOD**
KOMMUNIKATIONSVERWALTUNGSSYSTEM UND KOMMUNIKATIONSVERWALTUNGSVERFAHREN
SYSTÈME ET PROCÉDÉ DE GESTION DE COMMUNICATIONS

(30) Priority: 30.04.2013 JP 2013095704
(43) Date of publication of application: 09.03.2016
(73) Proprietor: Ricoh Company, Ltd., Tokyo 143-8555 (JP)
(72) Inventor: KATO, Yoshinaga, Tokyo 143-8555 (JP); KAJI, Katsuyuki, Tokyo 143-8555 (JP)
(74) Representative: Schwabe - Sandmair - Marx
(86) International application number: PCT/JP2014/062289
(87) International publication number: WO 2014/178443

(56) References cited:
- WO-A1-2012/086844
- WO-A1-2013/035219
- JP-A- 2004 185 553
- US-A1- 2004 111 670
- US-B2- 6 339 826

## Description

### TECHNICAL FIELD

The present invention relates to managing communication of a communications terminal.

### BACKGROUND ART

In recent years, communications systems for conducting teleconferences via a network such as the Internet are being widely used in view of demands to cut business travel costs and save business travel time. In such communications systems, teleconferences are conducted by enabling image data and audio data to be exchanged between multiple communications terminals (see e.g., Japanese Laid-Open Patent Publication No. 2008-227577).

Note that a user may download and install various applications (apps) in a communications terminal such as a smartphone or a personal computer (PC) and establish communication using various communication protocols.

Meanwhile, a provider of an application may change an image to be displayed when the application is started (activated). In such a case, the user of the communications terminal has to go through the trouble of downloading and installing the new application.

US 6 339 826 B2 discloses a system with a network interconnecting a server and a plurality of user stations. The server stores a plurality of user applications for downloading to user stations and further stores access permissions for the applications for each user. When a user attempts to log onto the system, the server uses the user's log-on identifier to build a list of applications for which the user has access permission. The server downloads to the station a list of applications to which the user has access permission. The user station uses the list to build a folder containing only the applications from the list to which the user has access permission. The system further verifies from the list that the user has access to applications that are represented by objects that the user may have added to his or her desktop at an earlier time. For each user desktop preference specified by the user at an earlier time that corresponds to a user application, the access permission for the user to the user application is checked from the list, and, if the application is not included on the list, the desktop object representing the application is removed from the desktop.

WO 2012/086844 A1 discloses a transmission management system. When terminals perform communication through a reservation, a management unit manages terminal identification information identifying each terminal and reservation identification information identifying the reservation. When a first terminal performs communication through a predetermined reservation, a receiving unit receives, from the first terminal, a request to acquire state of a second transmission terminal. A reservation extracting unit extracts the reservation identification information associated with terminal identification information identifying the second terminal from the management unit. A determining unit determines whether the reservation identified by the extracted reservation identification information matches the predetermined reservation. A transmitting unit transmits first state information indicating first state of the second terminal to the first terminal when the determining unit determines that the reservation matches the predetermined reservation, but transmits second state information indicating second state of the second terminal when the determining unit determines that the reservation does not match the predetermined reservation.

### DISCLOSURE OF THE INVENTION

### PROBLEMS TO BE SOLVED BY THE INVENTION

It is a general object of at least one embodiment of the present invention to provide a communications management system that can relieve a user of a communications terminal of the trouble of having to download and install a new application.

### MEANS FOR SOLVING THE PROBLEMS

The invention is disclosed in the independent claims. The dependent claims represent preferred embodiments of the invention.

According to an embodiment of the present invention, a communications management system that manages communication of a communications terminal is provided. The communications management system includes an execution image frame data management unit configured to manage application identification information of a plurality of applications installed in the communications terminal in association with address information, within a communications network, of execution image frame data representing an execution image frame of an execution image to be displayed when a given application of the plurality of applications is activated at the communications terminal. The communications management system also includes a data management unit configured to manage the execution image frame data in association with the address information, a transmission unit configured to transmit to the communications terminal the application identification information and the address information that are managed in association with each other by the execution image frame data management unit, and a reception unit configured to receive from the communications terminal an execution image frame data request designating the execution image frame data that is managed in association with the address information associated with the application identification information of a designated application of the plurality of applications that has been activated at the communications terminal. The transmission unit transmits to the communications terminal the execution image frame data designated in the execution image frame data request received by the reception unit.

### EFFECTS OF THE PRESENT INVENTION

According to an aspect of the present invention, a communications management system manages execution image frame data to be displayed when an application is activated at a communication terminal, and transmits to the communications terminal the execution image frame data corresponding to the application that is activated at the communication terminal. In this way, a user of the communications terminal may be relieved of the burden of having to download and install a new application in the communications terminal, for example.

### BRIEF DESCRIPTION OF THE DRAWINGS

FIG. 1 illustrates an exemplary configuration of a communications system according to an embodiment of the present invention;
FIG. 2 illustrates communication sessions for establishing a call between call terminals;
FIGS. 3A-3C illustrate the image qualities of image data exchanged using the SVC standard;
FIG. 4 is an external view of an exemplary call terminal;
FIG. 5 is a block diagram illustrating a hardware configuration of the call terminal;
FIG. 6 is a block diagram illustrating a hardware configuration of a call management system;
FIG. 7 is a block diagram illustrating a software configuration of the call terminal;
FIG. 8 is a block diagram illustrating functional configurations of the call terminal and the call management system;
FIG. 9 illustrates an example of a visual information management table;
FIG. 10 illustrates an example of a terminal authentication management table;
FIG. 11 illustrates an example of a terminal status management table;
FIG. 12 illustrates an example of an app availability management table;
FIG. 13 illustrates an example of an execution image frame data management table;
FIG. 14 illustrates an example of a destination list frame;
FIG. 15 illustrates an example of a user setting information list frame;
FIG. 16 illustrates an example of a call information list frame;
FIG. 17 illustrates an example of a connection confirmation screen frame;
FIG. 18 illustrates a destination list management table as an example of an execution image content management table;
FIG. 19 illustrates a user setting information management table as another example of an execution image content management table;
FIG. 20 illustrates a notification information management table as another example of an execution image content management table;
FIG. 21 illustrates a user setting content data management table as an example of an execution image content data management table;
FIG. 22 illustrates a notification content data management table as another example of an execution image content data management table;
FIG. 23 is a sequence chart illustrating process steps from activating a requesting terminal to displaying an app list at the requesting terminal;
FIG. 24 is a sequence chart illustrating process steps from accepting a selection of an app icon at the requesting terminal to transmitting destination status information to a call destination candidate;
FIG. 25 illustrates an exemplary screen image of an app list;
FIG. 26 illustrates an exemplary screen image of a destination list;
FIG. 27 illustrates an exemplary screen image of a user setting information list;
FIG. 28 illustrates an exemplary screen image of a notification information list; and
FIG. 29 illustrates an exemplary screen image of a connection confirmation screen.

### MODE FOR CARRYING OUT THE INVENTION

In the following, embodiments of the present invention are described with reference to the accompanying drawings.

### <<Overall Configuration>>

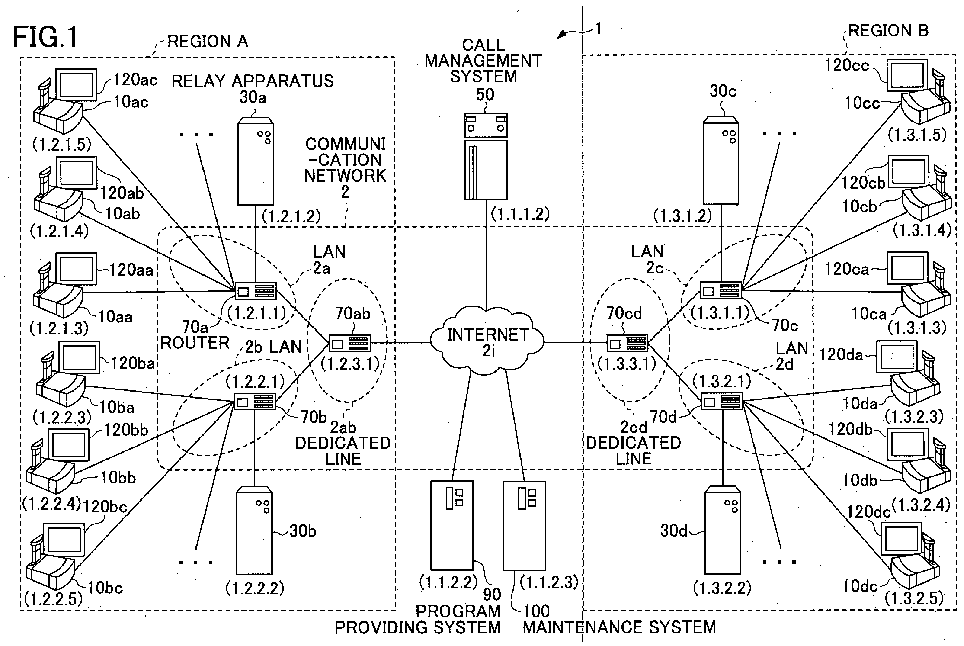

FIG. 1 illustrates an overall configuration of a call system 1 as an example of a communications system according to an embodiment of the present invention. As illustrated in FIG. 1, the call system 1 includes a plurality of call terminals 10aa-10ac, 10ba-10bc, 10ca-10cc, and 10da-10dc; a plurality of displays 120aa-120ac, 120ba-120bc, and 120ca-120cc, for the call terminals 10aa-10ac, 10ba-10bc, 10ca-10cc, and 10da-10dc; a plurality of repeaters 30a-30d; a call management system 50; a program providing system 90; and a maintenance system 100. The call system 1 enables exchange of call data such as image data and audio data to conduct a teleconference between remote locations, for example. The call system 1 also includes a plurality of routers 70a, 70b, 70c, 70d, 70ab, and 70cd that are configured to select an optimal path for the call data.

The call terminals 10aa-10ac, the repeater 30a, and the router 70a are interconnected by a LAN 2a. The call terminals 10ba-10bc, the repeater 30b, and the router 70b are interconnected by a LAN 2b. The LAN 2a and the LAN 2b are interconnected by a dedicated line 2ab including the router 70ab. The LAN 2a and the LAN 2b, and the dedicated line 2ab are configured within a certain region A. For example, the region A may be China, the LAN 2a may be configured within an office located in Beijing, and the LAN 2b may be configured within an office located in Shanghai.

The call terminals 10ca-10cc, the repeater 30c, and the router 70c are interconnected by a LAN 2c. The call terminals 10da-10dc, the repeater 30d, and the router 70d are interconnected by a LAN 2d. The LAN 2c and the LAN 2d are interconnected by a dedicated line 2cd including the router 70cd. The LAN 2c, the LAN 2d, and the dedicated line 2cd are configured within a certain region B. For example, the region B may be the United States, the LAN 2c may be configured within an office located in New York, and the LAN 2d may be configured within an office located in Washington D.C. Communication may be established between the regions A and B through the routers 70ab and 70cd that are interconnected via the Internet 2i.

Note that in the following descriptions, "call terminal" may simply be referred to as "terminal", and "call management system" may simply be referred to as "management system". Also, any given one of the plurality of call terminals 10aa-10ac, 10ba-10bc, 10ca-10cc, and 10da-10dc may simply be referred to as "terminal 10"; any given one of the plurality of displays 120aa-120ac, 120ba-120bc, and 120ca-120cc may simply be referred to as "display 120"; and any given one of the plurality of repeaters 30a-30c may simply be referred to as "repeater 30". Further, the terminal that issues a request to initiate a teleconference is referred to as "requesting terminal", and the terminal to which the request is addressed is referred to as "destination terminal". Also, any given one of the plurality of routers 70a, 70b, 70c, 70d, 70ab, and 70cd is simply referred to as "router 70". Note that a call may be established through exchange of audio, video (image), or both audio and video (image).

The management system 50, the program providing system 90, and the maintenance system 100 are connected to the Internet 2i. The management system 50, the program providing system 90, and the maintenance system 100 may be established at the region A, the region B, or some other region.

In the present embodiment, a communications network 2 is established by the LAN 2a, the LAN 2b, the dedicated line 2ab, the Internet 2i, the dedicated line 2cd, the LAN 2c, and the LAN 2d. The communications network 2 may include areas where wired communication can be established as well as areas where wireless communication can be established using Wi-Fi (Wireless Fidelity) or Bluetooth (registered trademark), for example.

Note that the four numbers indicated below each of the terminals 10, the repeaters 30, the management system 50, the routers 70, the program providing system 90, and the maintenance system 100 in FIG. 1 represent an IP address based on the general IPv4 technology. For example, the IP address of the terminal 10aa is "1.2.1.3". Note that although the IPv6 technology may be used instead of the IPv4 technology, the IPv4 is used in the present example to simplify the illustrations.

The call terminals 10 may be used to establish calls in various situations such as a call between multiple offices, a call between different departments within the same office, a call within the same room, a call between the outdoors and indoors, and a call between terminals located outdoors, for example. In the case where the call terminals 10 are used outdoors, wireless communication may be established using a mobile telephone communications network, for example.

Also, when a call application 1031 (described below) of the terminal 10 is activated, the terminal 10 may establish a call for a user by transmitting/receiving call data and act as a teleconference terminal, for example. The terminal 10 is configured to transmit/receive call data using predetermined communications systems (call control system for connecting to or disconnecting from a call destination, and coding system for converting call data into IP packets). Note that in the following descriptions, "application" may be referred to as "app".

Examples of the above call control system include the SIP (Session Initiation Protocol), the H.323, an extension to the SIP, an instant messaging protocol, a protocol using the SIP MESSAGE method, the IRC (Internet Relay Chat) protocol, and an extension to an instant messaging protocol. Note that examples of an instant messaging protocol include the XMPP (Extensible Messaging and Presence Protocol), and protocols used by ICQ (registered trademark), AIM (registered trademark), and Skype (registered trademark). An example of an extension of an instant messaging protocol includes the Jingle.

In a case where a plurality of terminals 10 use the same call app, these terminals 10 may establish a call with each other via the communications network 2. Note that examples of a call app include call apps for teleconferencing as well as other various call and messaging apps such as Skype, Google Talk, LINE, Kakao Talk, and Tango (registered or unregistered trademarks).

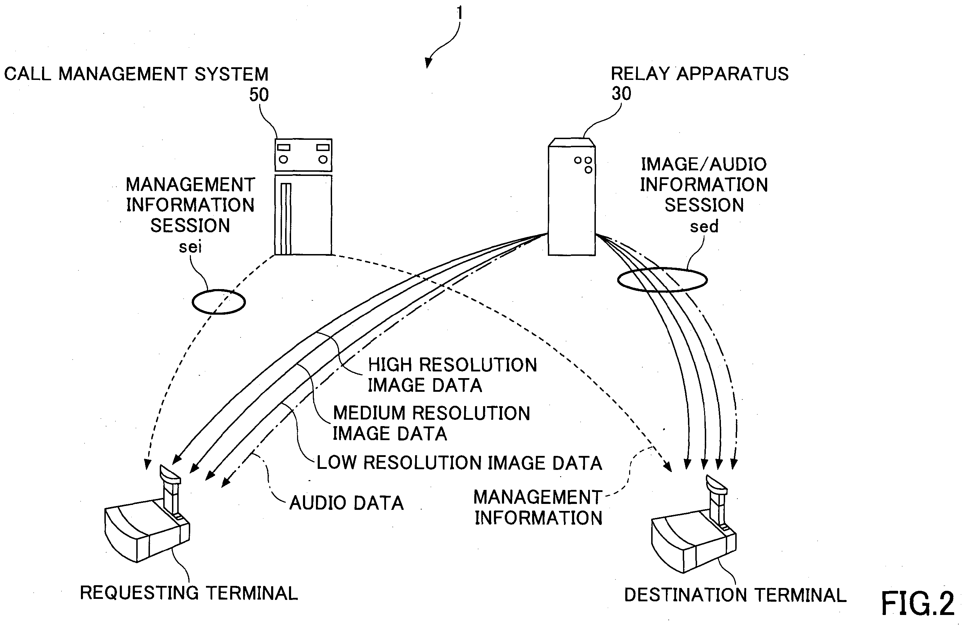

As illustrated in FIG. 2, in the call system 1 of the present embodiment, a management information session sei is established between the requesting terminal and the destination terminal to enable the exchange of various items of management information via the management system 50. Also, four sessions may be established between the requesting terminal and the destination terminal to enable the exchange of high-resolution image data, medium-resolution image data, low-resolution image data, and audio date via the repeater 30. Note that in FIG. 2, the above four sessions are collectively represented as "image/audio data session sed".

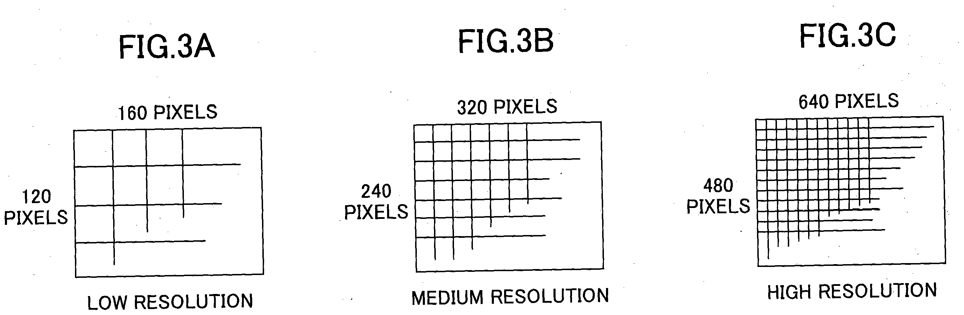

In the following, the image qualities (resolution) of the image data exchanged are described. FIGS. 3A-3C illustrate the image qualities of image data exchanged using the SVC (Scalable Video Coding) standard in FIG. 2.

FIG. 3A illustrates a 160×120 pixels (160 pixels wide, 120 pixels high) low-resolution image as a base image, FIG. 3B illustrates a 320×240 pixels (320 pixels wide, 240 pixels high) medium-resolution image, and FIG. 3C illustrates a 640×480 pixels (640 pixels wide, 480 pixels high) high-resolution image. In the case of exchanging image data using a narrow band, low-quality image data made up of low-resolution image data of the base image is relayed. In the case where a relatively wide band is used, the low-resolution image data of the base image and medium-quality image data of the medium-resolution image are relayed. In the case where a substantially wide band is used, the low-resolution image data, the medium-resolution image data, and high-quality image data of the high-resolution image are relayed. Note that because the data quantity of audio data is smaller than the data quantity of image data, the audio data is relayed regardless of whether a narrow band, a relatively wide band, or a substantially wide band is used in the communications network 2.

### «Hardware Configuration»

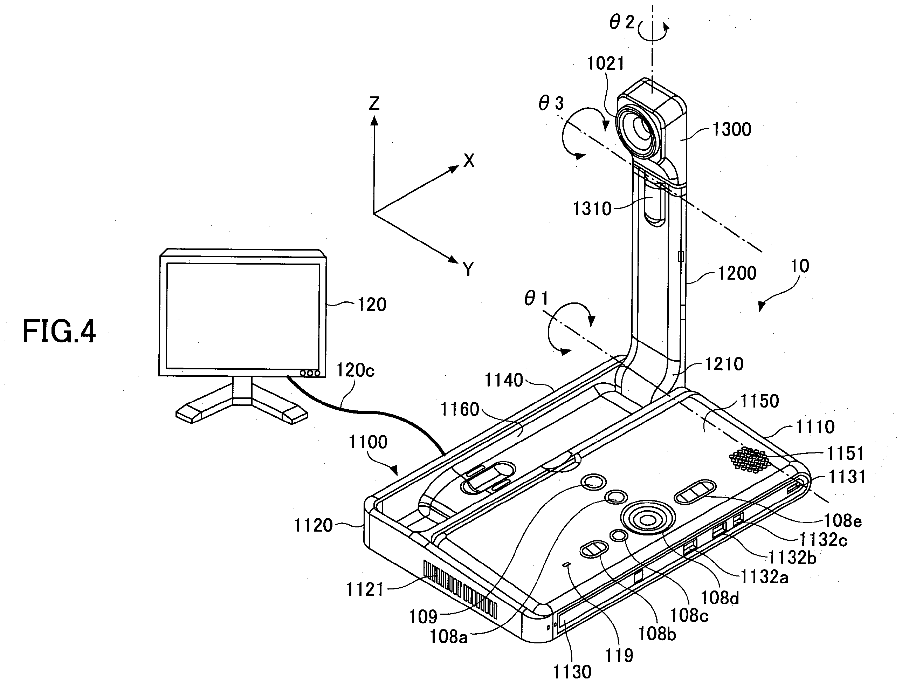

In the following, hardware configurations of components used in the present embodiment are described. FIG. 4 is an exemplary external view of the call terminal 10 of the present embodiment. In the example illustrated in FIG. 4, the call terminal 10 includes a casing 1100, an arm 1200, and a camera housing 1300. An air inlet face including a plurality of air inlet holes (not shown) is arranged at a front side face of the casing 1100, and an exhaust face 1121 including a plurality of exhaust holes is arranged at a rear side wall 1120 of the casing 1100. In this way, when a cooling fan inside the casing 1100 is driven, external air at the front side of the terminal 10 may be introduced via the air inlet face (not shown) and discharged at the rear side of the terminal 10 via the exhaust face 1121. Also, an audio pickup hole 1131 is arranged at a right side wall 1130 of the casing 1100, and audio such as voice, sound, and noise may be picked up by a built-in microphone 114 (described below).

An operation panel 1150 is arranged on a top face of the casing 1100 toward the right wall surface 1130. On the operation panel 1150, a plurality of operation buttons 108a-108e (described below), a power switch 109 (described below), an alarm lamp 119, and an audio output face 1151 including a plurality of audio output holes for passing audio output from a built-in speaker 115 (described below) are arranged. An accommodating portion 1160 corresponding to a concave portion for accommodating the arm 1200 and the camera housing 1300 is arranged on the top face of the casing 1100 toward a left side wall 1140. A plurality of connection ports 1132a-1132c for establishing electrical connection with an external device connection I/F 118 (described below) are arranged at the right side wall 1130 of the casing 1100. A connection port (not shown) for electrically connecting a cable 120c for the display 120 to the external device connection I/F 118 is arranged at the left side wall 1140 of the casing 1100.

Note that in the following descriptions, any given one of the plurality of operation buttons 108a-108e may simply be referred to as "operation button 108", and any given one of the plurality of connection ports 1132a-1132c may simply be referred to as "connection port 1132".

The arm 1200 is attached to the casing 1100 through a torque hinge 1210 so that the arm 1200 can rotate in an up-down direction, within a tilt angle θ1 range of 135 degrees, with respect to the casing 1100. Note that FIG. 4 illustrates a state in which the tilt angle θ1 is 90 degrees. The camera 12 is built inside the camera housing 1300 and is capable of capturing images of users, documents, and the interior of a room, for example. Also, a torque hinge 1310 is arranged at the camera housing 1300. The camera housing 1300 is attached to the arm 1200 via the torque hinge 1310. The camera housing 1300 is configured to be rotatable horizontally within a panning angle θ2 range of ±180 degrees with respect to the state illustrated in FIG. 4, which state is assumed to be 0 degrees, and the camera housing 1300 is configured to be rotatable vertically within a tilt angle θ3 range of ±45 with respect to the arm 1200.

Note that the external view of FIG. 4 illustrates merely one example of the call terminal 10. That is, the call terminal 10 is not limited to the configuration illustrated in FIG. 4 but may instead be a general PC, a smartphone, or a tablet terminal, for example. Also, the camera 112 and the microphone 114 do not necessarily have to be built-in devices arranged inside the terminal 10 but may instead be externally attached to the terminal 10, for example.

Note that the external views of the management system 50, the program providing system 90, and the maintenance system 100 may be substantially identical to the external views of general server computers. Thus, descriptions thereof are omitted.

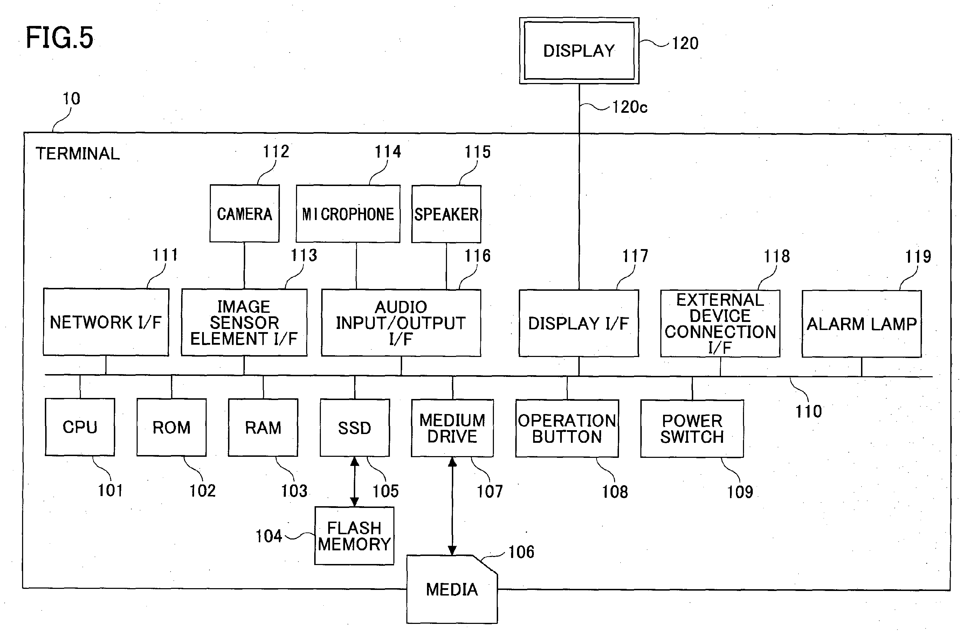

FIG. 5 is a block diagram illustrating an exemplary hardware configuration of the terminal 10 according to the present embodiment. The call terminal 10 as illustrated in FIG. 5 includes a central processing unit (CPU) 101, a read only memory (ROM) 102, a random access memory (RAM) 103, a flash memory 104, a solid state drive (SSD) 105, a media drive 107, the operation button 108, the power switch 109, a network interface (I/F) 111, the camera 112, an image sensor element I/F 113, the microphone 114, the speaker 115, an audio input/output I/F 116, a display I/F 117, the external device connection I/F 118, and the alarm lamp 119 that are connected to each other by a bus 110.

The CPU 101 controls overall operations of the call terminal 10. The ROM 102 stores programs such as an IPL (initial program loader) for driving the CPU 101, for example. The RAM 103 is used as a work area by the CUP 101. The flash memory 104 stores various programs for the call terminals 10 and data such as image data and audio data. The SSD 105 controls data read/write operations on the flash memory 104 according to control by the CPU 101. The media drive 107 controls read/write operations on media 106 such as a flash memory. The operation button 108 may be operated upon selecting a call destination of the call terminal 10, for example. The power switch 109 is for switching ON/OFF the power of the call terminal 10. The network I/F 111 is an interface that is connected to the communications network 2 and enables data communication using the communications network 2.

The camera 112 is configured to capture an image of an object according to control by the CPU 101 and obtain image data of the captured image. The image sensor element I/F 112 is an interface that is connected to the camera 12 and controls drive operations of the camera 112. The audio input/output I/F 116 is an interface that is connected to the microphone 14 for inputting audio and the speaker 15 for outputting audio. The audio input/output I/F 116 controls audio signal input/output operations of the microphone 114 and the speaker 115 according to control by the CPU 101. The display I/F 117 is an interface that is connected to the external display 12 and is configured to transmit image data to the display 12 according to control by the CPU 101. The external device connection I/F 118 is for establishing connection with various external devices. The alarm lamp 119 is for signaling an abnormality of a function of the call terminal 10. The bus 110 may be an address bus or a data bus for establishing electrical connection between the various components illustrated in FIG. 5, for example.

The display 120 may include a liquid crystal display (LCD) or an organic electroluminescence (EL) display for displaying an image of an object or an operation screen, for example. The display 120 is connected to the display I/F 117 via the cable 120c. The cable 120c may be an analog RGB (VGA) cable, a Component Video cable, a HDMI (High-Definition Multimedia Interface) cable, or a DVI (Digital Video Interactive) cable, for example.

The camera 112 includes a lens and a solid state image sensor that converts light into an electrical charge to digitize an image (video) of an object. The solid state image sensor may be a CMOS (Complementary Metal Oxide Semiconductor) sensor, or a CCD (Charge Coupled Device) sensor, for example.

The external device connection I/F 118 may establish electrical connection with an external device such as an external camera, an external microphone, or an external speaker via a cable such as a USB (Universal Serial Bus) cable that is inserted into the connection port 1132 of the casing 1100 illustrated in FIG. 4, for example. In a case where an external camera is connected to the external device connection I/F 118, the CPU 101 may prioritize drive operations of the external camera over the built-in camera 112. Similarly, in a case where an external microphone or an external speaker is connected to the external device connection I/F 118, the CPU 101 may prioritize drive operations of the external microphone or the external speaker over the built-in microphone 114 or the built-in speaker 115.

Note that the media 106 may be a removable recording medium that may be loaded into the call terminal 10. Also, although the flash memory 104 is illustrated as an example of a non-volatile memory on which data read/write operations are performed according to control by the CPU 101, other types of non-volatile memories such as an EEPROM (Electrically Erasable and Programmable ROM) may be used instead of the flash memory 104, for example.

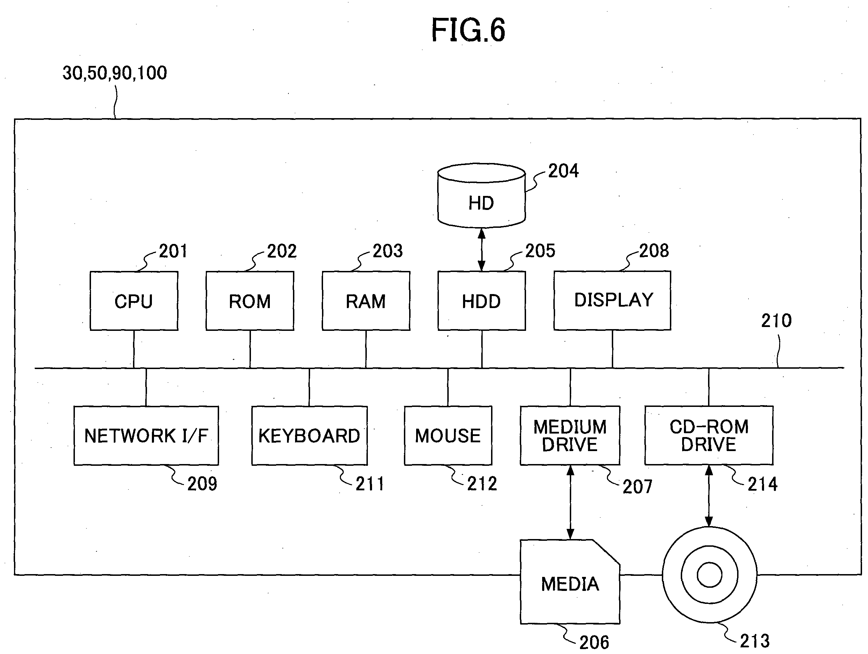

FIG. 6 is a block diagram illustrating an exemplary hardware configuration of the management system 50. The management system 50 as illustrated in FIG. 6 includes a CPU 201, a ROM 202, a RAM 203, a hard disk (HD) 204, a hard disk drive (HDD) 205, a media drive 207, a display 208, a network I/F 209, a keyboard 211, a mouse 212, and a CD-ROM drive 214 that are connected to each other by a bus 210.

The CPU 201 controls overall operations of the management system 50. The ROM 202 stores programs such as an IPL that are used for driving the CPU 201. The RAM 203 is used as a work area for the CPU 201. The HD 204 stores various data and programs for the management system 50. The HDD 205 controls data read/write operations on the HD 204 according to control by the CPU 201. The media drive 207 controls data read/write operations on media 206 such as a flash memory. The display 208 displays various items of information such as a cursor, a menu, a window, characters, and/or an image, for example. The network I/F 209 is an interface for establishing data communication using the communications network 2. The keyboard 211 includes multiple keys for inputting characters, numeric values, and various commands, for example. The mouse 212 may be used to select and/or execute a command, select an object to be processed, or move a cursor, for example. The CD-ROM drive 214 controls data read/write operations on a CD-ROM (Compact Disc Read-Only Memory) 213, which is one example of a removable recording medium. The bus 210 may be an address bus or a data bus, for example, that is configured to establish electrical connection between the various components of the management system 50 illustrated in FIG. 6.

Note that the repeater 30, the program providing system 90, and the maintenance system 100 may have hardware configurations substantially identical to that of the management system 50. Accordingly, descriptions thereof are omitted.

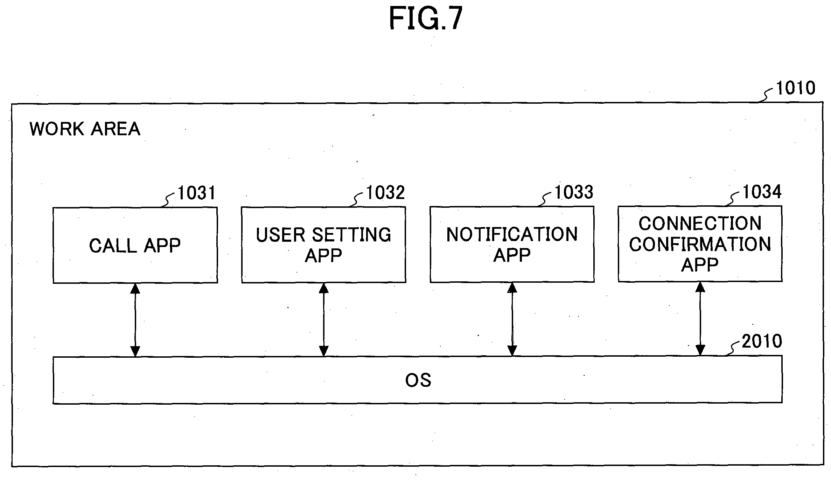

FIG. 7 is a block diagram illustrating an exemplary software configuration of the terminal 10. As illustrated in FIG. 7, an OS 1020, the call app 1031, a user setting app 1032, a notification app 1033, a connection confirmation app 1034 are run on a work area 1010 of the RAM 103. The OS 1020 and the above apps 1031-1034 may be pre-installed in the terminal 10 at the factory.

The OS 1020 is basic software that provides basic functions and manages overall operations of the terminal 10. The user setting app 1032 is an app for enabling a user of the terminal 10 to perform initial setup of the terminal 10. The notification app 1033 is an app for acquiring notifications from the management system 50.

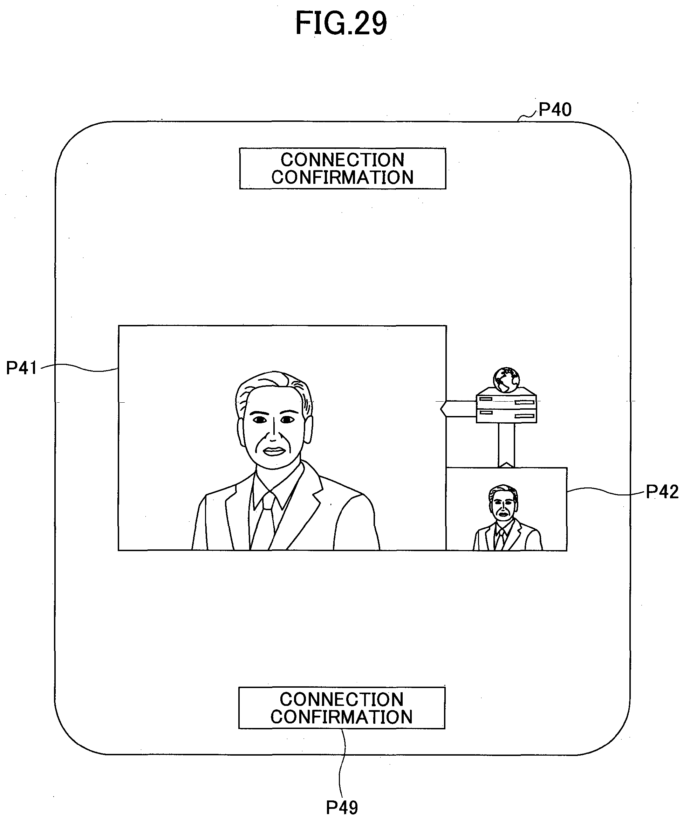

The connection confirmation app 1034 is an app for determining whether the user has established proper connection with a call destination. For example, as illustrated in FIG. 29, the connection confirmation app 1034 may display two versions of image data; namely, image data captured at the terminal 10 of the user that is transmitted to the call destination and displayed at the call destination, and image data captured at the terminal 10 of the user that is not transmitted to the call destination but is directly displayed at the terminal 10 of the user.

Note that the above apps 1031-1034 are merely illustrative examples of apps that may be installed in the terminal 10, and other types of apps may be installed as well. For example, a plurality of call apps may be installed in the terminal 10. In this case, call apps using different communication protocols may be installed, for example.

### «Functional Configuration»

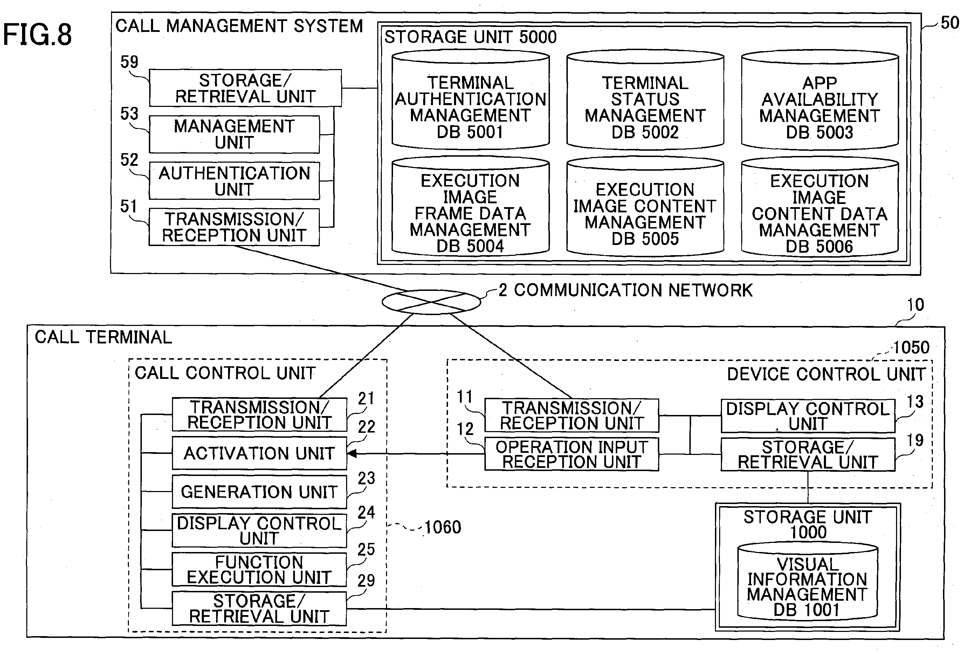

In the following, a functional configuration of the call system 1 of the present embodiment is described. FIG. 8 is a block diagram illustrating exemplary functional configurations of the terminal 10 and the management system 50 included in the call system 1 of the present embodiment. Note that in the example illustrated in FIG. 8, the terminal 10 and the management system 50 are connected to the communications network 2 and are capable of establishing data communication with each other via the communications network 2. Also, note that FIG. 8 primarily illustrates functions implemented by the call app 1031 of the plurality of apps 1031-1034.

### <Functional Configuration of Call Terminal>

The terminal 10 includes a device control unit 1050 and a call control unit 1060. The device control unit 1050 may be implemented by executing the OS 1020 illustrated in FIG. 7. The call control unit 1060 may be implemented by activating the call app 1031 illustrated in FIG. 7.

The device control unit 1050 includes a transmission/reception unit 11, an operation input reception unit 12, a display control unit 13, and a storage/retrieval unit 19. The above units correspond to functions that may be implemented by one or more of the hardware components illustrated in FIG. 5 operating in response to a command from the CPU 101 based on an activation app (program) that is loaded into the RAM 103 from the flash memory 104.

The call control unit 1060 includes a transmission/reception unit 21, an activation unit 22, a generation unit 23, a display control unit 24, a function execution unit 25, and a storage/retrieval unit 29. The above units correspond to functions that may be implemented by one or more of the hardware components illustrated in FIG. 5 operating in response to a command from the CPU 101 based on a call app (program) that is loaded onto the RAM 103 from the flash memory 104.

The terminal also includes a storage unit 1000 that may be implemented by the ROM 102, the RAM 103, and the flash memory 104 illustrated in FIG. 3, for example. The storage unit 1000 includes a visual information management database (DB) 1001 that stores a visual information management table, which is described below.

### (Visual Information Management Table)

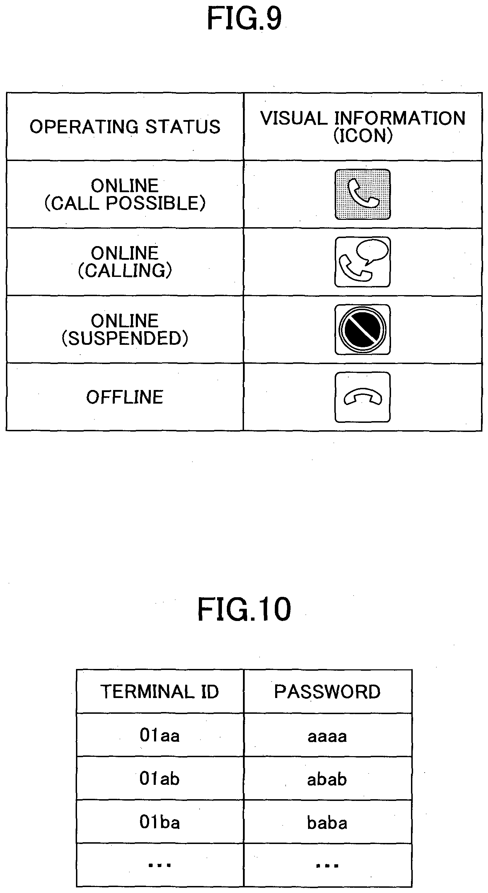

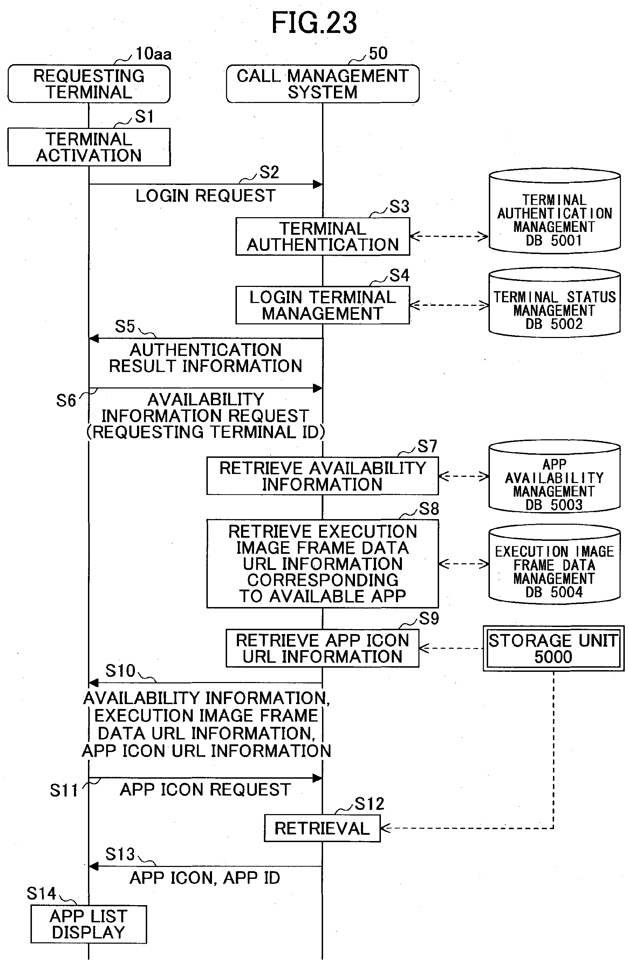

FIG. 9 illustrates an exemplary data structure of the visual information management table. The visual information management table of FIG. 9 stores and manages operating status information representing an operating status of a destination terminal in association with operating status icon data (example of second visual information) representing operating status icons to be displayed in a destination list displayed at the display 120. FIG. 9 illustrates examples of operating status icons that represent various operation statuses. Note that the operation status icon data may be stored in the visual information management of the terminal 10 at the factory, or the operation status icon data may be transmitted to the terminal 10 from the management system 50 when the terminal 10 as the requesting terminal makes a login request in step S2 of FIG. 23 (described below), for example. Also, note that the visual information management table of FIG. 9 includes four types of operating status information; namely, online (call possible), online (calling), online (suspended), and offline.

### (Functional Configuration of Device Control Unit)

In the following, the functional configuration of the device control unit 1050 of the terminal 10 is described in further detail with reference to FIG. 8. Note that in the descriptions below, the functional components of the device control unit 1050 are described in relation to the hardware components illustrated in FIG. 5 that are primarily used to implement the functional components of the device control unit 1050.

The transmission/reception unit 11 of the terminal 10 illustrated in FIG. 8 may be implemented by a command from the CPU 101 and the network I/F 111 illustrated in FIG. 5. The transmission/reception unit 11 enables exchange of data (or information) with a destination terminal, a device, or a system via the communications network 2.

The operation input reception unit 12 may be implemented by a command from the CPU 101 illustrated in FIG. 5, and the operations buttons 108a-108e and the power switch 109 illustrated in FIG. 4. The operation input reception unit 12 accepts various user inputs and selections. For example, when the user turns on the power switch 109 of FIG. 4, the operation input reception unit 12 of FIG. 8 accepts the power-on operation input by the user and turns on the power of the terminal 10 accordingly.

The display control unit 13 may be implemented by a command from the CPU 101 and the display I/F 117 of FIG. 5. When image data is received from the other side during a call, the display control unit 13 performs control operations to transmit the received image data to the display 120.

The storage/retrieval unit 19 may be implemented by a command from the CPU 101 and the SSD 105, or a command from the CPU 101 of FIG. 5. The storage/retrieval unit 19 executes processes for storing data in the storage unit 1000, or retrieving data from the storage unit 1000.

### (Functional Configuration of Call Control Unit)

In the following, the functional configuration of the call control unit 1060 of the terminal 10 is described with reference to FIGS. 5 and 8. Note that in the descriptions below, the functional components of the call control unit 1060 are described in relation to the hardware components illustrated in FIG. 5 that are primarily used to implement the functional components of the call control unit 1060.

The transmission/reception unit 21 illustrated in FIG. 8 may be implemented by a command from the CPU 101 and the network I/F 111 illustrated in FIG. 5. The transmission/reception unit 21 enables exchange of data (or information) with a destination terminal, a device, or a system via the communications network 2.

The activation unit 22 may be implemented by a command from the CPU 101 of FIG. 5. When the operation input reception unit 12 of the device control unit 1050 accepts a user selection of an app, the activation unit 22 activates the call control unit 1060 (call app 1031) based on an activation request from the operation input reception unit 12.

The generation unit 23 may be implemented by a command from the CPU 101 of FIG. 5. The generation unit 23 generates a destination list screen by including destination status information (example of execution image content data) and the above operation status icon data (example of second visual information) in a destination list frame (example of execution image frame data) as described below.

The display control unit 24 may be implemented by a command from the CPU 101 and the display I/F 117 of FIG. 5. The display control unit 24 performs control operations for transmitting the destination list screen data generated by the generation unit 23 to the display 120.

The function execution unit 25 may be implemented by a command from the CPU 101 and the camera 112, the microphone 114, or the speaker 115 illustrated in FIG. 5, for example. The function execution unit 25 performs control operations for establishing a call using image data and/or audio data.

The storage/retrieval unit 29 may be implemented by a command from the CPU 101 and the SSD 105, or a command from the CPU 101 of FIG. 5. The storage/retrieval unit 29 performs processes for storing data in the storage unit 1000 or retrieving data from the storage unit 1000.

### <Functional Configuration of Management System>

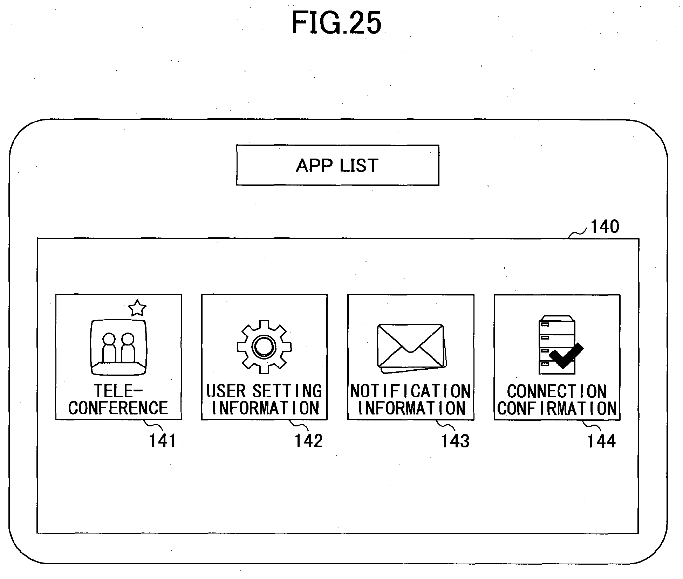

In FIG. 8, the management system 50 includes a transmission/reception unit 51, an authentication unit 52, a management unit 53, and a storage/retrieval unit 59. The above units correspond to functions that may be implemented by one or more of the hardware components illustrated in FIG. 6 operating in response to a command from the CPU 201 based on a program for the management system 50 that is loaded into the RAM 203 from the flash HD 204, for example. The management system 50 also includes a storage unit 5000 that is configured by the HD 204. The storage unit 5000 stores and manages, for each app ID, URL information of app icon data (example of first visual information) representing an app icon that may be selected by the user to active a corresponding app. The storage unit 5000 also stores and manages the app icon data at the corresponding URL information. Further, the storage unit 5000 acts as a data management unit that stores and manages execution image frame data (described below) and execution image content data (described below) at predetermined URLs. The storage unit 5000 includes a terminal authentication management DB 5001, a terminal status management DB 5002, an app availability management DB 5003, an execution image frame data management DB 5004, an execution image content management DB 5005, and an execution image content data management DB 5006. Note that FIG. 25 illustrates app icon data of app icons 141, 142, 143, and 144 corresponding to examples of first visual information as described in detail below.

### (Terminal Authentication Management Table)

FIG. 10 illustrates an exemplary data structure of a terminal authentication management table. The terminal authentication management table as illustrated in FIG. 10 may be stored in the terminal authentication management DB 5001 of the storage unit 5000, for example. The terminal authentication management table stores and manages an authentication password for each terminal 10 managed by the management system 50 in association with a terminal ID of the corresponding terminal 10. For example, according to the terminal authentication management table illustrated in FIG. 10, the terminal ID of the terminal 10aa is "01aa" and the authentication password for the terminal 10aa is "aaaa".

### (Terminal Status Management Table)

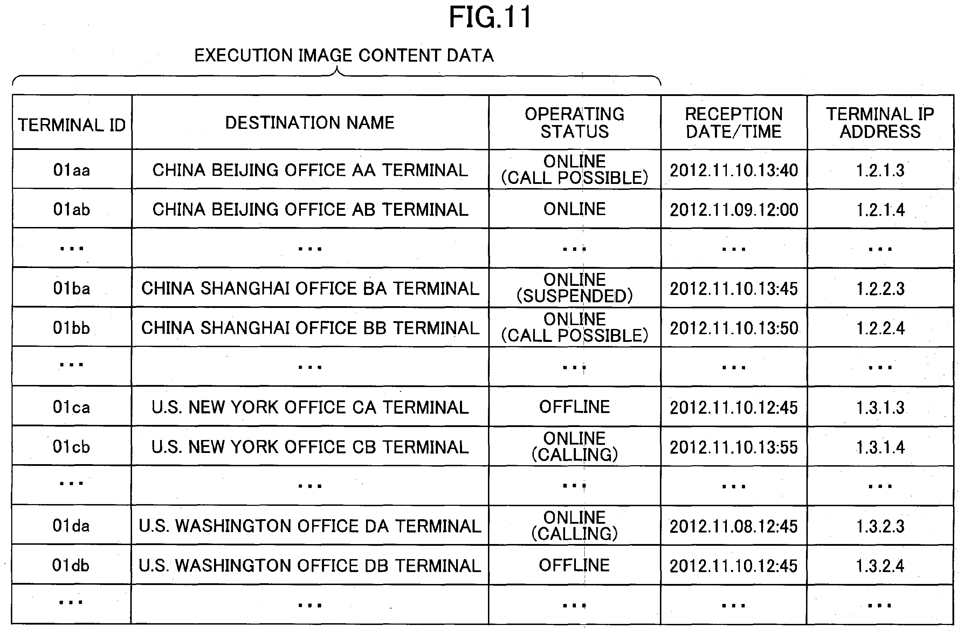

FIG. 11 illustrates an exemplary data structure of a terminal status management table. The terminal status management table as illustrated in FIG. 11 may be stored in the terminal status management DB 5002 of the storage unit 5000, for example. The terminal status management table stores and manages, for each terminal ID of terminals 10 managed by the management system 50, a destination name to be used when addressing a call to the corresponding terminal 10, an operating status of the corresponding terminal 10, a reception date/time when a login request (described below) is received at the management system 50, and an IP address of the corresponding terminal 10. For example, according to the terminal status management table illustrated in FIG. 11, with respect to the call terminal 10aa identified by the terminal ID "01aa", the destination name of the terminal 10aa is "China Beijing Office AA Terminal", the operating status of the terminal 10aa is "online (calling)", the reception date/time the management system 50 receives a login request is "2012/11/10/13:40", and the IP address of the terminal 10aa is "1.2.1.3". Note that the terminal ID, the type of terminal, and the destination name of each terminal 10 may be stored when the corresponding terminal 10 is registered with the management system 50 to establish data communication using the call system 1.

### (App Availability Management Table)

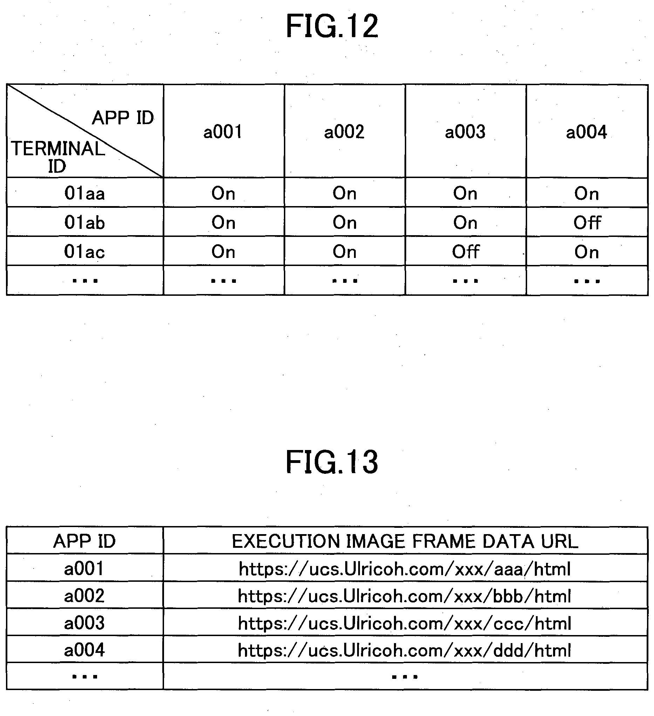

FIG. 12 illustrates an exemplary data structure of an app availability management table. The app availability management table illustrated in FIG. 12 may be stored in the app availability management DB 5003 of the storage unit 5000, for example. The app availability management table stores and manages availability information of each app of a plurality of apps installed in the terminal 10 in association with the terminal ID of each terminal 10. The availability information indicates whether each app is available for use (ON) or unavailable (OFF) at the corresponding terminal 10. The plurality of apps are each identified by an app ID, and the availability information is stored with respect to each app ID and each terminal ID. For example, according to the app availability management table illustrated in FIG. 12, with respect to the terminal 10aa identified by the terminal ID "01aa", one or more of four types of apps identified by the app IDs "a001", "a002", "a003", and "a004" may be used (activated).

### (Execution Image Frame Data Management Table)

FIG. 13 illustrates an exemplary data structure of an execution image frame data management table. The execution image frame data management table as illustrated in FIG. 13 may be stored in the execution image frame data management DB 5004 of the storage unit 5000. The execution image frame data management table stores and manages, for each app ID of a plurality of apps installed in the terminal 10, URL information within the communications network 2 (example of address information) of execution image frame data representing an execution image frame of an execution image to be displayed when the corresponding app is activated.

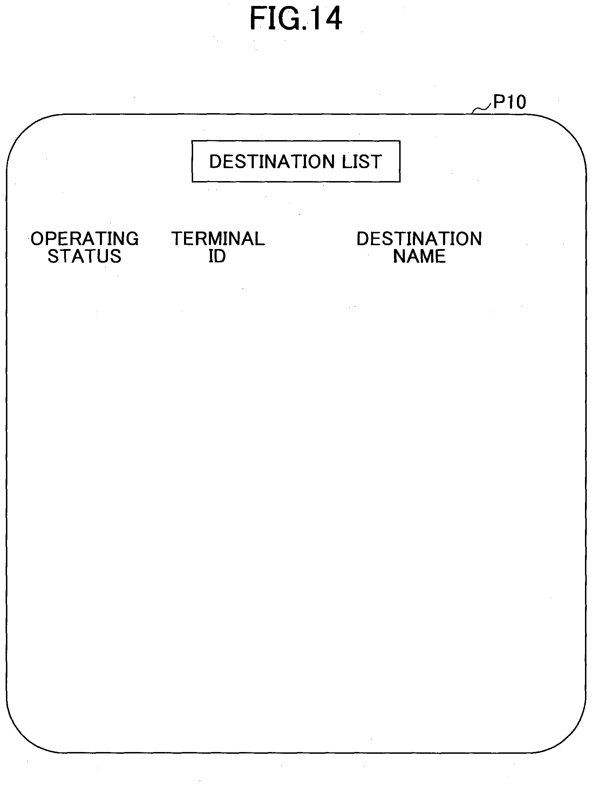

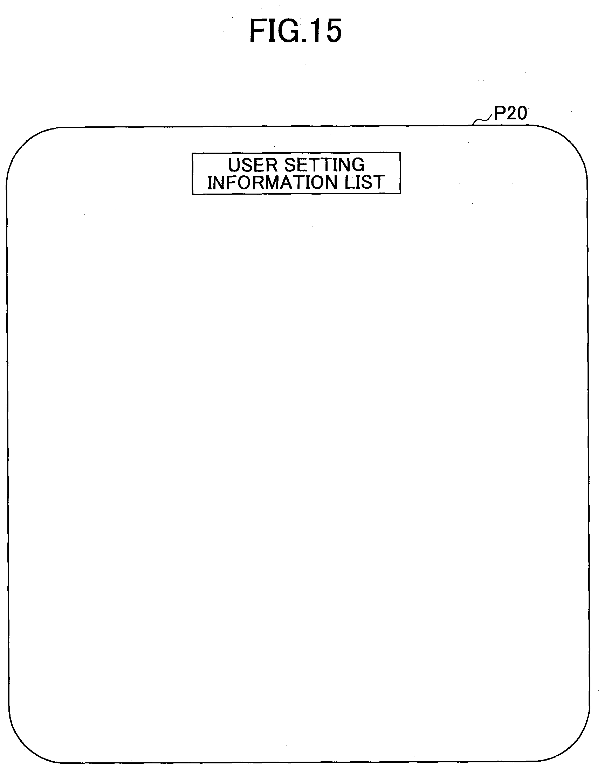

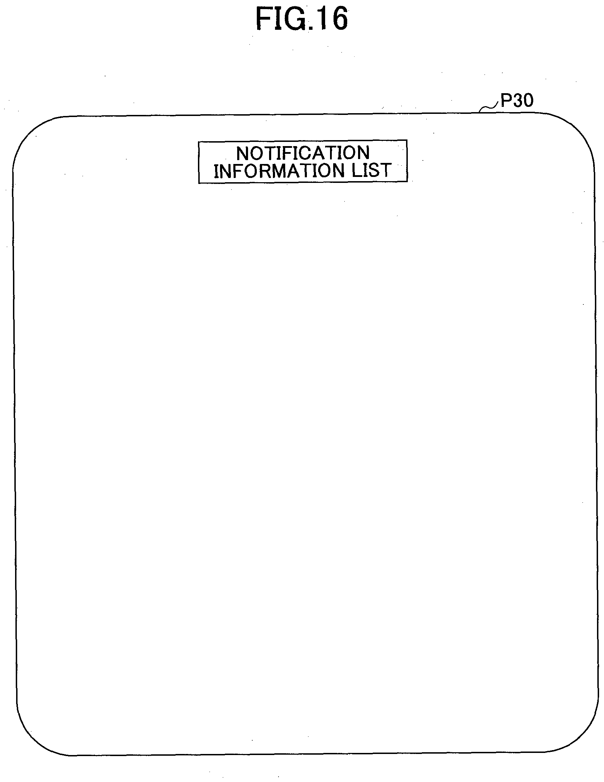

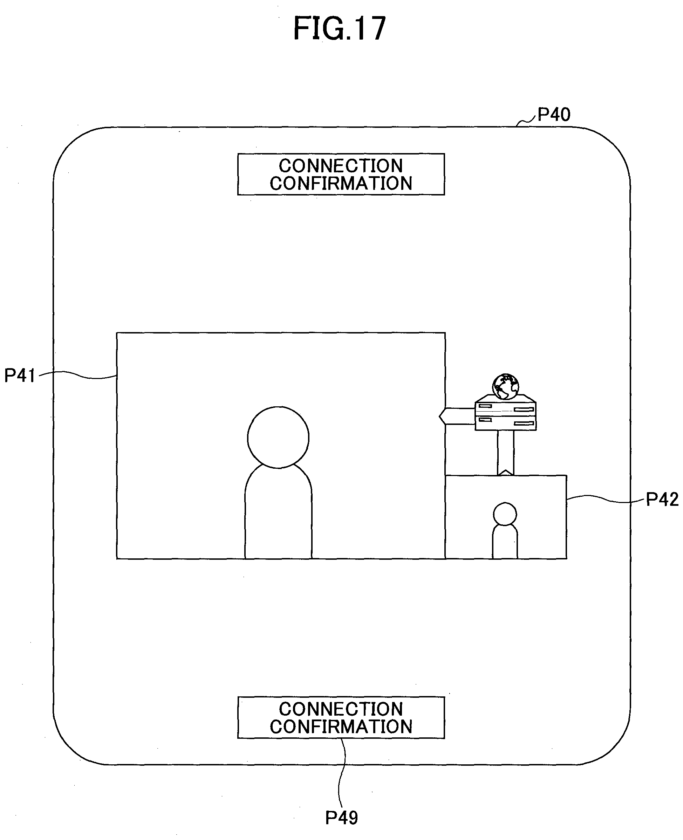

In the following, examples of execution image frames represented by execution image frame data for the above apps 1031-1034 are described. FIG. 14 illustrates a destination list frame. FIG. 15 illustrates a user setting information list frame. FIG. 16 illustrates a notification information list frame. FIG. 17 illustrates a connection confirmation screen frame.

The execution image frame data for the call app 1031 represents the frame of a destination list P10 as illustrated in FIG. 14. The illustrated frame of the destination list P10 includes an "operating status" field for displaying the second visual information that visually represents the operating status of a destination terminal, a "terminal ID" field for displaying the terminal ID of the destination terminal, and a "destination name" field for displaying the destination name of the destination terminal.

The execution image frame data for the user setting app 1032 represents the frame of a user setting information list P20 as illustrated in FIG. 15. The user setting information list P20 displays items of information for enabling the user of the terminal 10 to perform initial setup of the terminal 10.

The execution image frame data for the notification app 1033 represents the frame of a notification information list P30 as illustrated in FIG. 16. The notification information list P30 displays various items of notification information from the management system 50.

The execution image frame data for the connection confirmation app 1034 represents the frame of a connection confirmation screen P40 as illustrated in FIG. 17. The connection confirmation screen P40 is displayed to determine whether the user is properly connected to the call destination. The frame of the connection confirmation screen P40 includes a display region P41 for displaying image data captured at the terminal 10 of the user that is transmitted to the destination terminal and displayed at the destination terminal, and a display region P42 for displaying the image data captured at the terminal 10 of the user that is not transmitted to the call destination but is directly displayed at the terminal 10 of the user. The connection confirmation screen P40 also includes a "connection confirmation" button P49 that is pressed by the user to start connection confirmation. Note that dummy images are displayed at the display regions P41 and P42 before connection confirmation is actually started. When connection confirmation is started, image data of an image that is actually captured by the terminal 10 are displayed at the display regions P41 and P42. The user may compare the image displayed at the display regions P41 and the image displayed at the display region P42 to confirm whether image data of an image captured at the terminal 10 of the user is being properly transmitted to the destination terminal.

### ((Execution Image Content Management Table))

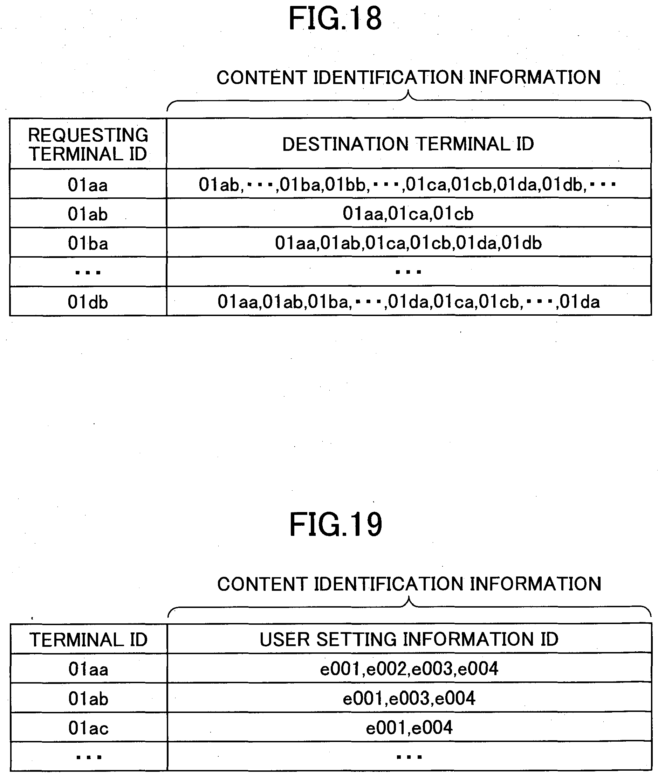

The execution image content management DB 5005 of the storage unit 5000 may store three types of execution image content management tables as illustrated in FIGS. 18-20, for example. In the following, these execution image content management tables are described in detail.

### (Destination List Management Table)

FIG. 18 illustrates an exemplary data structure of a destination list management table as one example of an execution image content management table. The destination list management table stores and manages, for each terminal ID of each requesting terminal that can initiate a call by issuing a call request, the terminal IDs of all corresponding destination terminals registered as call destination candidates for the corresponding requesting terminal. For example, according to the destination list management table illustrated in FIG. 18, the terminal 10aa as the requesting terminal identified by the terminal ID "01aa" is able to initiate a call addressed to the terminal 10ab as one of its destination candidate terminals identified by the terminal ID "01ab". That is, terminals identified by the terminal IDs "01ab, ..., 01ba, 01bb, ..., 01ca, 01cb, 01da, 01db, ..." are stored as destination candidate terminals for the requesting terminal 10aa. Note that the destination terminal candidate IDs stored in the destination list management table may be updated through addition or deletion in response to an addition request or a deletion request sent from a given requesting terminal to the management system 50, for example. Also, note that the terminal IDs of the destination candidate terminals stored in the destination list management table correspond to examples of content identification information.

### (User Setting Information Management Table)

FIG. 19 illustrates an exemplary data structure of a user setting information management table as another example of an execution image content management table. The user setting information management table stores and manages, for each terminal ID of each terminal 10, information IDs identifying user setting information for enabling the user to perform initial setup of the corresponding terminal 10. For example, according the user setting information management table illustrated in FIG. 19, with respect to the terminal 10aa identified by the terminal ID "01aa", four types of user setting information identified by the information IDs "e002, e002, e003, e004" may be provided. Note that the information IDs identifying the user setting information correspond to examples of content identification information.

### (Notification Information Management Table)

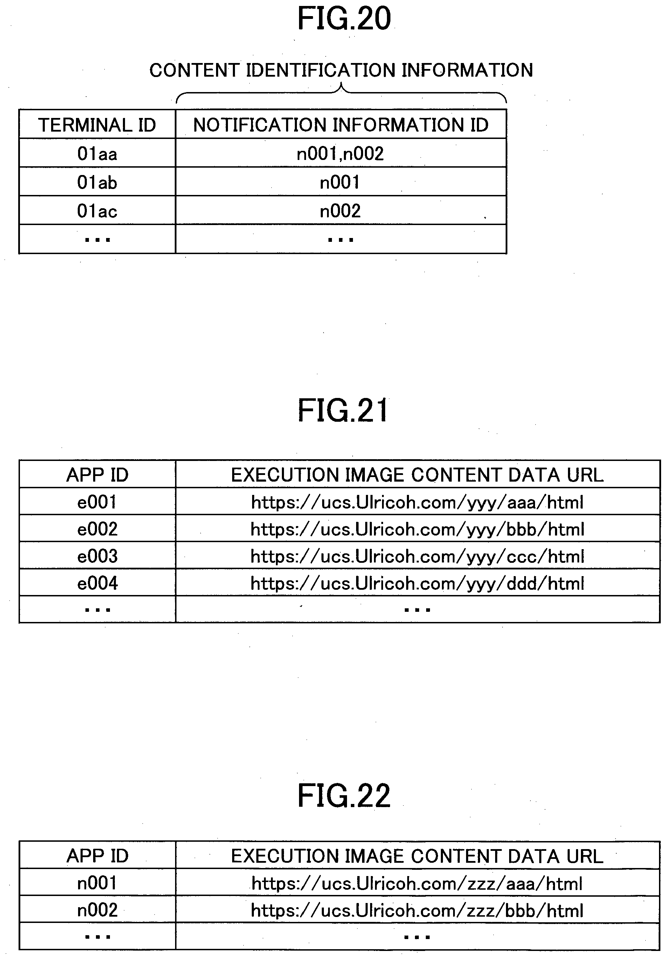

FIG. 20 illustrates an exemplary data structure of a notification information management table as another example of an execution image content management table. The notification information management table stores and manages, for each terminal ID of each terminal 10, information IDs identifying notification information that may be provided to the user of the corresponding terminal 10. For example, according to the notification information management table illustrated in FIG. 20, with respect to the terminal 10aa identified by the terminal ID "01aa", two types of notification information identified by the information IDs "n001, n002" may be provided to the user. Note that the information IDs identifying the notification information correspond to examples of content identification information.

### ((Execution Image Content Data Management Table))

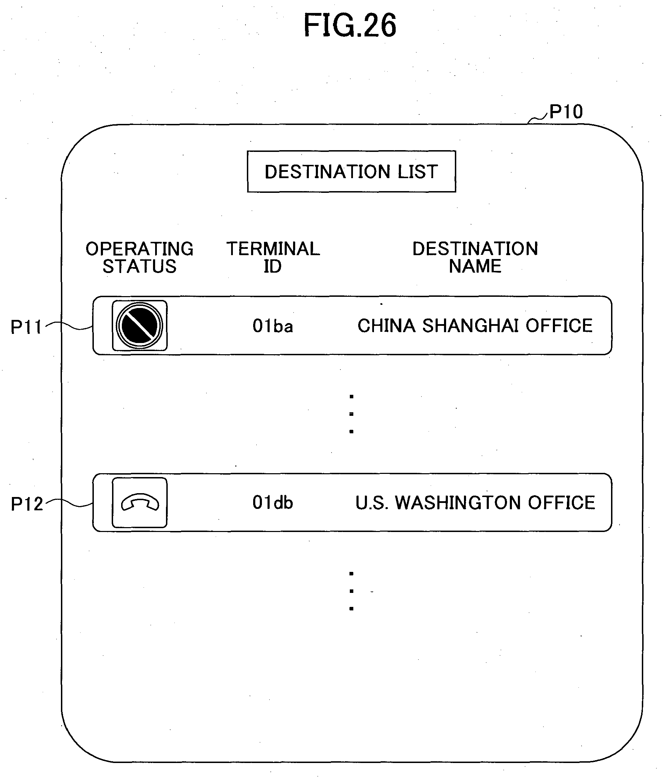

The execution image content data management DB 5005 of the storage unit 5000 may store two types of execution image content data management tables as illustrated in FIGS. 21 and 22, for example. In the following, these execution image content data management tables are described in detail. Also, note that the above-described terminal status management table illustrated in FIG. 11 may also act as an execution image content data management table that stores and manages execution image content data in association with content identification information. That is, the table illustrated in FIG. 11 stores and manages, for each destination terminal ID stored in the destination list management table of FIG. 18, corresponding execution image content data to be displayed in the destination list P10. In this case, the "terminal ID" of FIG. 11 may correspond to the execution image content identification information, and the "destination name" and "operating status" of FIG. 11 may correspond to the execution image content data to be displayed in the destination list P10 (see FIG. 26).

### (User Setting Content Data Management Table)

FIG. 21 illustrates an exemplary data structure of a user setting content data management table as an example of an execution image content data management table. The user setting content data management table stores and manages, for each information ID stored in the user setting information management table of FIG. 19, URL information of corresponding execution image content data.

### (Notification Information Content Data Management Table)

FIG. 22 illustrates an exemplary data structure of a notification content data management table as another example of an execution image content data management table. The notification content data management table stores and manages, for each information ID stored in the notification information management table of FIG. 20, URL information of corresponding execution image content data.

### (Functional Components of Management System)

In the following, the other functional components of the management system 50 are described with reference to FIG. 8. Note that the functional components of the management system 50 are described below in relation to the hardware components of the management system 50 illustrated in FIG. 6 that are primarily used to implement the functional components of the management system 50.

The transmission/reception unit 51 may be implemented by a command from the CPU 201 and the network I/F 209 illustrated in FIG. 6. The transmission/reception unit 51 transmits/receives data (or information) to/from a terminal, a device, or a system via the communications network 2.

The authentication unit 52 may be implemented by a command from the CPU 201 of FIG. 6. The authentication unit 52 authenticates a terminal by searching the terminal authentication management table of FIG. 10 using a terminal ID and a password received by the transmission/reception unit 51 as a key to determine whether the same terminal ID and password are stored in the terminal authentication management table.

The management unit 53 may be implemented by a command from the CPU 201 of FIG. 6. The management unit 53 stores and manages information in the terminal status management table as illustrated in FIG. 11. That is, the management unit 53 stores, for each terminal ID and destination name of each terminal 10, the operating status of the terminal 10, the reception date/time the management system 50 receives a login request, and the IP address of the terminal 10.

The storage/retrieval unit 59 may be implemented by a command from the CPU 201 and the HDD 205 illustrated in FIG. 6, or a command from the CPU 201. The storage/retrieval unit 59 executes processes of storing data in the storage unit 5000, and retrieving data from the storage unit 5000.

### <<Processes/Operations>>

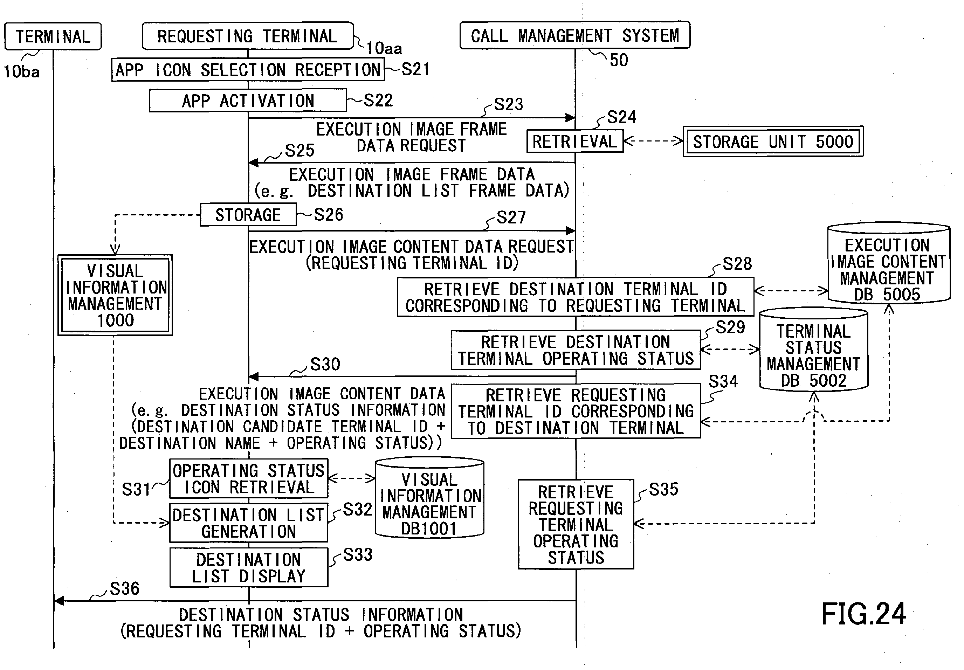

In the following, a communications management method according to an embodiment of the present invention is described with reference to FIGS. 23-29. First, referring to FIG. 23, process steps from activating the terminal 10aa corresponding to a requesting terminal to displaying an app list are described below. FIG. 23 is a sequence chart illustrating the process steps from activating the requesting terminal 10aa to prompting the display of an app list at the requesting terminal 10aa. Note that the process steps illustrated in FIG. 23 and FIG. 24 (described below) may be implemented by exchanging management information in the management information session sei illustrated in FIG. 2.

When a user turns on the power switch 109 (FIG. 5) of the requesting terminal 10aa, the operation input reception unit 12 (FIG. 8) accepts the power-on operation input and activates the requesting terminal 10aa (step S1). In response to the acceptance of the power-on operation input, the transmission/reception unit 11 sends a login request to the management system 50 via the communications network 2 (step S2). In this way, the management system 50 receives the login request. Note that the login request may alternatively be issued in response to the user inputting a command to the requesting terminal 10aa, for example.

The login request includes a terminal ID identifying the terminal 10aa itself as the requesting terminal and a password. The terminal ID and the password may be retrieved from the storage unit 1000 via the storage/retrieval unit 19 and transmitted to the transmission/reception unit 11, for example. Alternatively, the terminal ID and the password may be input by the user of the requesting terminal 10aa, for example. Note that when the login request is transmitted from the requesting terminal 10aa to the management system 50, the management system 50 corresponding to the receiver of the login request may acquire the IP address of the requesting terminal 10aa corresponding to the sender of the login request.

Next, the authentication unit 52 of the management system 50 authenticates the requesting terminal 10aa by searching the terminal authentication management table (FIG. 10) of the storage unit 5000 using the terminal ID and password included in the login request as a key to determine whether the same terminal ID and password are stored in the authentication management table (step S3). If the authentication unit 52 determines that the same terminal ID and password are stored in the authentication management table and the requesting terminal therefore has valid authorization to log into the management system 50, the management unit 53 stores in the terminal status management table (FIG. 11) the terminal ID of the terminal 10aa, the operating status of the terminal 10aa, the reception date/time the management system 50 received the login request, and the IP address of the terminal 10aa in association with each other (step S4). In this way, the terminal ID "01aa", the operating status "online (calling)", the reception date/time "2012.11.10. 13:40", and the IP address of the terminal 10aa "1.2.1.3" may be stored in association with each other in the terminal status management table illustrated in FIG. 11.

Then, the transmission/reception unit 51 of the management system 50 sends authentication result information indicating the authentication result obtained by the authentication unit 52 to the requesting terminal 10aa corresponding to the sender of the login request via the communications network 2 (step S5). In turn, the transmission/reception unit 11 of the requesting terminal 10aa receives the authentication result information.

In the following, subsequent process steps to be executed when the authentication unit 52 determines that the requesting terminal 10aa has valid authorization to log into the management system 50 are described.

The transmission/reception unit 11 of the requesting terminal 10aa sends an availability information request to the management system 50 via the communications network 2 (step S6). In turn, the transmission/reception unit 51 of the management system 50 receives the availability information request. The availability information request includes the terminal ID of the requesting terminal 10aa.

Next, the storage/retrieval unit 59 of the management system 50 retrieves corresponding availability information for the requesting terminal 10aa from the app availability management table (FIG. 12) by searching the app availability management table using the terminal ID included in the availability information request from the requesting terminal 10aa as a search key (step S7). According to the app availability management table illustrated in FIG. 12, the availability information for the terminal 10aa identified by the terminal ID "01aa" indicates that the app identified by the app ID "a001" is "ON", the app identified by the app ID "a002" is "ON", the app identified by the app ID "a003" is "ON", and the app identified by the app ID "a004" is "ON".

Then, the storage/retrieval unit 59 searches the execution image frame data management table (FIG. 13) using the app IDs that are indicated as available for use ("ON") by the availability information retrieved in step S7 as search keys, and retrieves URL information of the execution image frame data associated with the app IDs that are indicated as available for use ("ON") (step S8). Further, the storage/retrieval unit 59 retrieves from the storage unit 5000 URL information of app icon data of app icons corresponding to the app IDs indicated as available for use ("ON") (step S9).

Then, the transmission/reception unit 51 of the management system 50 sends the availability information retrieved in step S7, the URL information of the execution image frame data retrieved in step S8, and the URL information of the app icons retrieved in step S9 to the requesting terminal 10aa via the communications network 2 (step S10). In turn, the transmission/reception unit 11 of the requesting terminal 10aa receives the availability information, the URL information of the execution image frame data, and the URL information of the app icon data.

Then, the transmission/reception unit 11 of the requesting terminal 10aa accesses the URL information of the app icons received in step S10 and sends an app icon request for the app icon data of the app icons (step S11). In turn, the transmission/reception unit 51 of the management system 50 receives the app icon request. Note that the app icon request is made with respect to the app icons of apps that are indicated as available for use ("ON") by the availability information.

Then, the storage/retrieval unit 59 of the management system 50 retrieves the app icon data of the app icons requested in step S11 from the storage unit 5000 (step S12). Then, the transmission/reception unit 51 sends the requested app icon data and the corresponding app IDs of the app icons to the requesting terminal 10aa via the communications network 2 (step S13). In turn, the transmission/reception unit 11 of the requesting terminal 10aa receives the app icon data of the apps that are available for use ("ON").

Then, the display control unit 13 prompts the display 120aa to display an "app list" screen 140 as illustrated in FIG. 25 (step S14). FIG. 25 illustrates an exemplary screen image of an app list. The screen 140 displays app icons of all apps that are available for use ("ON") at the terminal 10aa. In the illustrated example, four app icons 141, 142, 143, and 144 for apps identified by the app IDs a001, a002, a003, a004 are displayed on the screen 140.

In the following, referring to FIG. 24, process steps from accepting a selection of an app icon at the requesting terminal 10aa to sending destination status information to a call destination candidate are described. FIG. 24 is a sequence chart illustrating exemplary process steps from accepting an app icon selection at the requesting terminal 10aa to sending destination status information to a call destination candidate 10ba.

When the user operates one or more of the operation buttons 108a-108e illustrated in FIG. 4 and selects a desired app icon from the plurality of app icons displayed on the screen 140 of FIG. 25, for example, the operation input reception unit 12 of the requesting terminal 10aa accepts the app icon selection made by the user (step S21). In the following descriptions, it is assumed that the app icon 141 (FIG. 25) representing the call app 1031000 for conducting a teleconference (FIG. 7) has been selected by the user.

Upon accepting the selection of the app icon 141 representing the call app 1031, the operation input reception unit 12 of the device control unit 1050 sends an activation request to the activation unit 22 of the call control unit 1060 to activate the call control unit 1060. The call control unit 1060 is implemented by activating the call app 1031 identified by the app ID associated with the selected app icon 141, and in this way, the call control unit 1060 is activated (step S22). Note that the process steps of the terminal 10aa up until this point are executed by the device control unit 1050. On the other hand, subsequent process steps of the terminal 10aa described below are executed by the call control unit 1060.

When the call control unit 1060 is activated, the transmission/reception unit 21 of the call control unit 1060 accesses the URL information of the execution image frame data for the app identified by the app ID associated with the app icon 141 selected in step S21, and sends an execution image frame data request to the management system 50 (step S23). In turn, the transmission/reception unit 51 of the management system 50 receives the execution image frame data request.

Then, the storage/retrieval unit 59 of the management system 50 reads the execution image frame data requested in step S23 from the storage unit 5000 (step S24). Then, the transmission/reception unit 51 sends the retrieved execution image frame data to the requesting terminal 10aa via the communications network 2 (step S25). In turn, the transmission/reception unit 21 of the requesting terminal 10aa receives the requested execution image frame data. Note that in the present example, the execution image frame represented by the execution image frame data received in step S25 corresponds to a destination list frame as illustrated in FIG. 14.

Then, the storage/retrieval unit 29 of the requesting terminal 10aa temporarily stores the execution image frame data received in step S25 (destination list frame data in the present example) in the storage unit 1000 (step S26).

Then, the transmission/reception unit 21 sends an execution image content data request to the management system 50 via the communications network 2 (step S27). Note that in the present example, the execution image content data request corresponds to a request for destination status information. In turn, the transmission/reception unit 51 of the management system 50 receives the request for destination status information. Note that the above request includes the terminal ID of the requesting terminal 10aa.

Then, the storage/retrieval unit 59 of the management system 50 retrieves the terminal IDs of destination terminal candidates with which the requesting terminal 10aa is capable of establishing communication by searching the execution image content management table (destination list management table of FIG. 18 in the present example) using the terminal ID of the requesting terminal 10aa as a search key (step S28). In the following descriptions, to simplify the illustrations, it is assumed that the terminal IDs "01ba" and "01db" identifying the terminals 10ba and 10db are retrieved in step S25 as the terminal IDs of destination terminal candidates for the requesting terminal 10aa identified by the terminal ID "01aa".

Then, the storage/retrieval unit 59 retrieves, for each of the terminal IDs of the destination terminal candidates retrieved in step S28 ("01ba" and "01db" in the present example), the destination name and operating status information of the corresponding terminals by searching the terminal status management table (FIG. 11) using the terminal IDs of the destination terminal candidates retrieved in step S28 as search keys (step S29).

Then, the transmission/reception unit 51 sends the retrieved destination status information to the requesting terminal 10aa via the communications network 2 (step S30). In turn, the transmission/reception unit 21 of the requesting terminal 10aa receives the destination status information. The destination status information includes the terminal IDs of the destination terminal candidates that were used as search keys in step S29, and their corresponding destination names and operating statuses. In this way, the requesting terminal 10aa may acquire the current operating status of each of the destination terminal candidates 10ba and 10db with which the requesting terminal 10aa is capable of establishing communication.

Then, the storage/retrieval unit 29 of the requesting terminal 10aa retrieves, for each of the terminal IDs received in step S30, the operating status icon data representing the operating status of the corresponding terminal by searching the visual information management table (FIG. 9) using the operating statuses received in step S30 as search keys (step S31).

Then, the generation unit 23 retrieves the destination list frame data that has been temporarily stored in the storage unit 1000, assigns the terminal IDs and the destination names received in step S30 and the operating status icons retrieved in step S31 to the destination list frame data, and generates image data to be included in the destination list P10 as illustrated in FIG. 26 (step S32). Then, the display control unit 24 prompts the display 120aa to display the destination list P10 as illustrated in FIG. 26 (step S33). FIG. 26 illustrates an exemplary screen image of the destination list P10. In FIG. 26, operating status icons representing operating statuses, terminal IDs, and destination names are indicated in the destination list frame illustrated in FIG. 14. Note that to simplify the illustrations, the screen image of FIG. 26 only includes a destination button P11 for the terminal identified by the terminal ID "01ba" and a destination button P12 for the terminal identified by the terminal ID "01db".

Thereafter, the user of the requesting terminal 10aa may select a desired destination button and thereby establish a call with the destination terminal represented by the selected destination button. Note that the call may be established by process operations of the function execution unit 25.

Meanwhile, the storage/retrieval unit 59 also retrieves from the destination list management table (FIG. 18) the terminal IDs of other requesting terminals that have the terminal ID "01aa" of the requesting terminal 10aa (sender of the login request) registered as a destination terminal candidate by searching the destination list management table using the terminal ID "01aa" of the requesting terminal 10aa as a search key (step S34). Note that in the following descriptions, to simplify the illustrations, it is assumed that the terminal IDs "01ba" and "01db" are retrieved in step S34.

Further, the storage/retrieval unit 59 retrieves from the terminal status management table (FIG. 11) the operating status of the requesting terminal 10aa corresponding to the sender of the login request by searching the terminal status management table using the terminal ID "01aa" of the requesting terminal as a search key (step S35).

Then, the transmission/reception unit 51 of the management system 50 sends destination status information including the terminal ID "01aa" of the requesting terminal 10aa and its operating status "online (call possible)" retrieved in step S35 to the destination terminal 10ba that is indicated as being "online" by the terminal status management table of FIG. 11 (step S36). According to the terminal status management table of FIG. 11, with respect to the terminals 10ba and 10db identified by the terminal IDs "01ba" and "01db" retrieved in step S34, the operating status of the terminal 10ba is indicated as "online" but the operating status of the terminal 10db is indicated S "offline". Thus, in the present example, the transmission/reception unit 51 only sends the destination status information to the terminal 10ba in step S36. Note that when sending the destination status information to the terminal 10ba, the transmission/reception unit 51 refers to the IP address of the terminal 10ba that is stored in association with the terminal ID "01ba" of the terminal 10bd in the terminal status management table of FIG. 11. In this way, the terminal ID "01aa" and the operating status "online (call possible)" of the requesting terminal 10aa corresponding to the sender of the login request may be conveyed to the terminal 10ba that is capable of establishing communication with the requesting terminal 10aa as the call destination.

Note that when a user of a terminal 10 other than the requesting terminal 10aa turns on the power switch 109 of the terminal 10, the operation input reception unit 12 accepts the power-on operation input in a manner substantially identical to the above process step S1, and subsequent processes may be substantially identical to the above process steps S2-S35. Accordingly, descriptions of such processes are omitted.

Also, note that although an exemplary case where the app icon 141 is selected is described above, similar processes may be performed when the app icon 142 or the app icon 143 is selected as briefly described below.

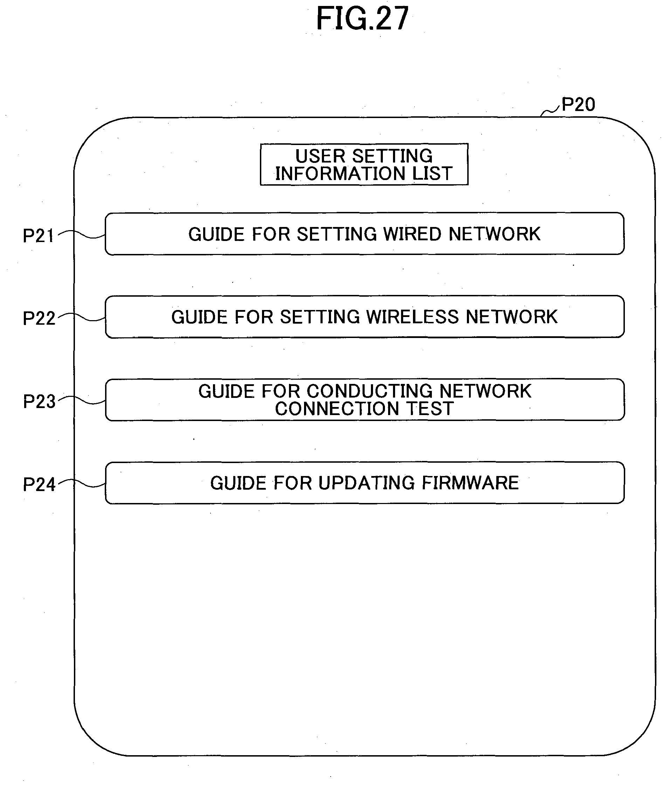

When the app icon 142 illustrated in FIG. 25 is selected, the execution image frame data to be retrieved and transmitted corresponds to frame data of the user setting information list P20 as illustrated in FIG. 15. Also, the execution image content management table to be searched corresponds to the user setting information management table as illustrated in FIG. 19. Further, the execution image content data management table to be searched corresponds to the user setting content data management table as illustrated in FIG. 21. Also, in step S33, instead of displaying the screen image of the destination list P10 including destination terminal candidates as illustrated in FIG. 26, a screen image of the user setting information list P20 including buttons P21-P24 representing different types of user setting information as illustrated in FIG. 27 may be displayed. The user setting information buttons P21-P24 represent user setting information stored and managed at the execution image content data URLs indicated in the user setting content data management table of FIG. 21. Note that FIG. 27 is an exemplary screen image of the user setting information list P20.

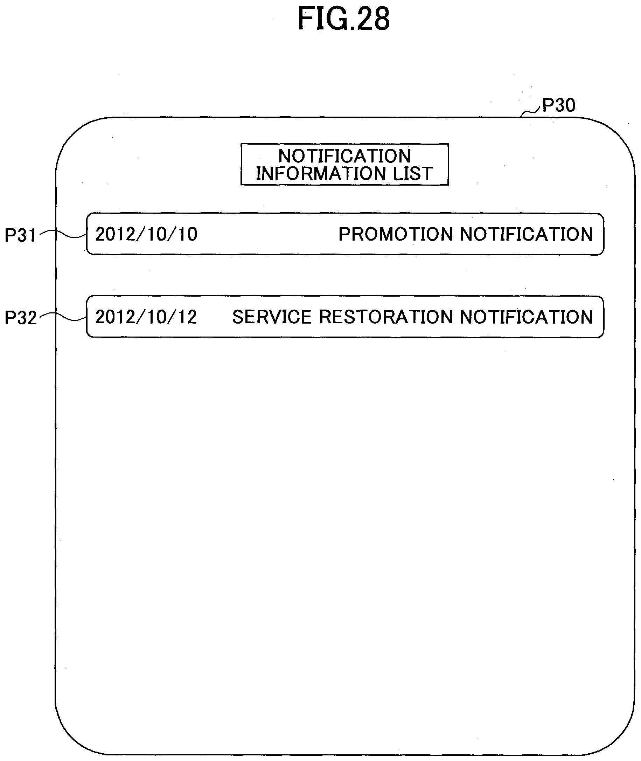

When the app icon 143 illustrated in FIG. 25 is selected, the execution image frame data to be retrieved and transmitted corresponds to frame data of the notification information list P30 as illustrated in FIG. 16. Also, the execution image content management table to be searched corresponds to the notification information management table as illustrated in FIG. 20. Further, the execution image content data management table to be searched corresponds to the notification content data management table as illustrated in FIG. 22. Also, in step S33, instead of displaying the screen image of the destination list P10 including destination terminal candidates as illustrated in FIG. 26, a screen image of the notification information list P30 including buttons P31 and P32 representing different types of notification information as illustrated in FIG. 28 may be displayed. The notification information buttons P31 and P32 represent notification information stored and managed at the execution image content data URLs indicated in the notification content data management table of FIG. 22. Note that FIG. 28 is an exemplary screen image of the notification information list P30.

On the other hand, when the app icon 144 illustrated in FIG. 25 is selected, subsequent processes may be different from those performed when one of the app icons 141-143 is selected. That is, when the app icon 144 is selected, the connection confirmation app 1034 prompts the display 120aa to display the connection confirmation screen P40 as illustrated in FIG. 17. When the user presses the connection confirmation button P49, the connection confirmation app 1034 may display a screen image as illustrated in FIG. 29. That is, the connection confirmation app 1034 may display an image captured at the requesting terminal that is displayed at the destination terminal in the display region P41, and the connection confirmation app 1034 may directly display the image captured at the requesting terminal in the display region P42. Note that FIG. 29 illustrates an exemplary screen image of the connection confirmation screen P40.

### <<Advantageous Effects>>

As described above, according to an aspect of the present embodiment, the management system 50 includes the execution image frame data management table (see FIG. 13) that manages, for each app ID, execution image frame data to be displayed when the corresponding app is activated at the terminal 10. The management system 50 transmits to the terminal 10 the execution image frame data corresponding to the app that is activated at the terminal 10. In this way, the user of the terminal 10 may be relieved of the trouble of having to download and install a new app, for example.

Also, the management system 50 includes the execution image content management table (see FIGS. 18-20) that manages, for each terminal ID, execution image content identification information of content data to be displayed within the execution image frame. The management system 50 transmits to the terminal 10 the execution image content identification information associated with the terminal ID of the terminal 10 making the request for the execution image content data. In this way, the management system 50 may accommodate cases where different services are provided for different terminals 10, for example.

Further, the management system 50 manages, for each terminal 10, availability information indicating whether each app is available for use at the terminal 10 (see FIG. 12), and transmits the availability information to the terminal 10. In this way, based on the availability information, the terminal 10 may provide apps that are already installed in the terminal 10 as available apps, and the user of the terminal 10 may be relieved of the burden of having to download and install a desired app.

Note that in a case where the terminal 10 is not a typical PC having ten-keys and the like but instead has a configuration as illustrated in FIG. 4 with only simple operations buttons 108a-108e, for example, it may be troublesome for the user to make operation inputs to download and install an app to the terminal 10. However, by implementing the present embodiment, the user may be relieved of the trouble of having to operate the terminal 10 to download and install an app, for example.

Further, in the present embodiment, the management system 50 is configured to transmit URL information of first visual information (e.g. app icon data) and URL information of execution image data (e.g. execution image frame data and execution image content data) to the terminal 10. Accordingly, the first visual information and the execution image data do not have to be stored in the terminal 10. Moreover, the terminal 10 may acquire the latest first visual information and execution image data from the management system 50.

### «Additional and Alternative Features»

Note that the repeater 30, the management system 50, the program providing system 90, and the maintenance system 100 of the present embodiment may each be configured by a single computer, or their functions may be arbitrarily divided and allocated to a plurality of computers, for example. In a case where the program providing system 90 is configured by a single computer, a program transmitted by the program providing system 90 may be divided into a plurality of modules upon being transmitted, or the program may be transmitted without being divided. In a case where the program providing system 90 is configured by a plurality of computers, a program may divided into a plurality of modules and transmitted from the plurality of computers.

Also, note that the program providing system 90 that is configured to provide various programs such as a program for the terminal 10, a program for the repeater 30, and a program for transmission management, for example; the HD 204 of the program providing system 90 storing such programs; and a recording medium such as a CD-ROM storing such programs are exemplary embodiments of a computer program product that may be distributed domestically or internationally to provide the above programs to a user, for example.

Also, note that the IDs used in the above-described embodiment correspond to identification information such as a language, characters, symbols, or marks used to uniquely identify a corresponding item. The identification information may also be a combination of two or more of languages, characters, symbols, or marks, for example.

The app ID is an example of application identification information. The application identification information may include the app name in addition to the app ID, for example. The terminal ID is an example of terminal identification information. The terminal identification information may include the manufacturing serial number of the terminal and a user ID of the user assigned to the terminal in addition to the terminal ID, for example.

Also, note that the icons illustrated in FIGS. 9 and 25 are merely illustrative examples. The icons may be represented by characters, symbols, pictorial signs, or any combination thereof, for example.

Also, although the reception date/time of a login request is stored and managed in the terminal status management table illustrated in FIG. 11, the present invention is not limited to such an example. Alternatively, only the reception time may be managed, for example.

Also, although the IP address of the terminal 10 is stored and managed in the terminal status management table illustrated in FIG. 11, the present invention is not limited to such an example. Alternatively, the FQDN (Fully Qualified Domain Name) may be managed in association with each terminal, for example. In this case, a conventional DNS (Domain Name System) server may be used to acquire the IP address corresponding to the FQDN, for example.

Also, although a teleconference terminal is described above as an example of the terminal 10, the present invention is not limited to such an example. In other examples, at least one of the requesting terminal and the destination terminal may correspond to an IP (Internet Protocol) telephone, an Internet telephone, or a PC, for example. Further, the terminal 10 is not limited to a call terminal but may alternatively be an information processing device that is capable of establishing other forms of data communication such as a smartphone, a tablet terminal, a game console, or a communications terminal of a car navigation system, for example. In such case, the management system 50 may act as a communications management system that manages communication of the terminal.

Further, the present invention is not limited to these embodiments, and numerous variations and modifications may be made without departing from the scope of the present invention.

### DESCRIPTION OF THE REFERENCE NUMERALS

1 call system (communications system)
2 communications network
10 call terminal (communications terminal)
11 transmission/reception unit
12 operation input reception unit
13 display control unit
19 storage/retrieval unit
21 transmission/reception unit
22 activation unit
23 generation unit
24 display control unit
25 function execution unit
29 storage/retrieval unit
50 call management system (communications management system)
51 transmission/reception unit
52 authentication unit
53 management unit
59 storage/retrieval unit (retrieval unit)
1000 storage unit
1001 visual information management DB
5000 storage unit (data management unit)
5001 terminal authentication management DB
5002 terminal status management DB (data management unit)
5003 app availability management DM (app availability management unit)
5004 execution image frame data management DB (execution image frame data management unit)
5005 execution image content management DB (execution image content management unit)
5006 execution image content data management DB

## Claims

1. A communications management system (50) that manages communication of a communications terminal (10), the communications management system (50) comprising:
an execution image frame data management unit (5004) configured to manage application identification information of a plurality of applications installed in the communications terminal in association with address information, within a communications network (2), of execution image frame data representing an execution image frame of an execution image to be displayed when a given application of the plurality of applications is activated at the communications terminal (10);
a data management unit (5002) configured to manage the execution image frame data in association with the address information;
a transmission unit (51) configured to transmit to the communications terminal (10) the application identification information and the address information that are managed in association with each other by the execution image frame data management unit (5004); and
a reception unit (51) configured to receive from the communications terminal (10) an execution image frame data request designating the execution image frame data that is managed in association with the address information associated with the application identification information of a designated application of the plurality of applications that has been activated at the communications terminal;
wherein the transmission unit (51) transmits to the communications terminal (10) the execution image frame data designated in the execution image frame data request received by the reception unit (51).

2. The communications system (50) as claimed in claim 1, further comprising:
an execution image content management unit (5005) configured to manage terminal identification information of the communications terminal (10) in association with content identification information of execution image content data to be displayed within the execution image frame;
wherein the data management unit (5002) manages the execution image content data in association with the content identification information;
wherein the reception unit (51) receives from the communications terminal (10) the terminal identification information of the communications terminal; and
wherein the transmission unit (51) transmits to the communications terminal (10) the execution image content data that is associated with the terminal identification information received by the reception unit (51).

3. The communications management system (50) as claimed in claim 1 or 2, further comprising:
an application availability management unit (5003) configured to manage availability information in association with the terminal identification information of the communications terminal (10) and the application identification information of the plurality of applications installed in the communications terminal (10), the availability information indicating whether a given application of the plurality of applications is available for use at the communications terminal (10);
wherein the reception unit (51) receives from the communications terminal (10) the terminal identification information of the communications terminal (10); and
wherein the transmission unit (51) transmits to the communications terminal (10) the availability information that is managed by the availability information management unit in association with the terminal identification information received by the reception unit (51).

4. The communications management system (50) as claimed in claim 3, wherein the transmission unit (51) transmits to the communications terminal (10) the address information managed by the execution image frame data management unit (5004) in association with the application identification information that is indicated as available for use by the availability information associated with the terminal identification received by the reception unit (51).

5. The communications management system (50) as claimed in any one of claims 1-4, wherein the plurality of applications include at least one of a call application for conducting a teleconference, a user setting application for enabling a user of the communications terminal(10) to perform initial setup of the communications terminal (10), a notification application for providing the user with notification information, and a connection confirmation application for confirming connection of the communications terminal (10).

6. The communications management system (50) as claimed in any one of claims 1-5, further comprising:
a retrieval unit (59) configured to retrieve the application identification information and the address information managed by the execution image frame data management unit (5004);
wherein the transmission unit (51) transmits to the communications terminal (10) the application identification information and the address information retrieved by the retrieval unit (59).

7. A communications management method executed by a communications management system that manages communication of a communications terminal (10),
wherein the communications management system (50) includes
an execution image frame data management unit (5004) configured to manage application identification information of a plurality of applications installed in the communications terminal in association with address information, within a communications network (2), of execution image frame data representing an execution image frame of an execution image to be displayed when a given application of the plurality of applications is activated at the communications terminal (10); and
a data management unit (5002) configured to manage the execution image frame data in association with the address information;
the communications management method comprising:
a transmission step of transmitting to the communications terminal (10) the application identification information and the address information that are managed in association with each other by the execution image frame data management unit (5004);
a reception step of receiving from the communications terminal (10) an execution image frame data request designating the execution image frame data that is managed in association with the address information associated with the application identification information of a designated application of the plurality of applications that has been activated at the communications terminal (10); and
a retrieval step of retrieving from the data management unit (5002) the execution image frame data designated in the execution image frame data request received in the reception step;
wherein the transmission step includes transmitting to the communications terminal (10) the execution image frame data retrieved in the retrieval step.

8. A computer program product comprising a computer-readable medium having a computer program recorded thereon that is executable by a computer, the computer program, when executed, causing the computer to perform the steps of the communications management method as claimed in claim 7.

## Patentansprüche

1. Kommunikationsverwaltungssystem (50), das eine Kommunikation eines Kommunikationsendgeräts (10) verwaltet, wobei das Kommunikationsverwaltungssystem (50) Folgendes umfasst:
eine Ausführungsbildrahmendaten-Verwaltungseinheit (5004), konfiguriert, Anwendungsidentifikationsinformationen einer Vielzahl von im Benutzerendgerät installierten Anwendungen in Verbindung mit Adressinformationen innerhalb eines Kommunikationsnetzwerks (2) von Ausführungsbildrahmendaten zu verwalten, die einen Ausführungsbildrahmen eines Ausführungsbilds darstellen, das gezeigt werden soll, wenn eine vorgegebene Anwendung der Vielzahl von Anwendungen am Kommunikationsendgerät (10) aktiviert wird;
eine Datenverwaltungseinheit (5002), konfiguriert, die
Ausführungsbildrahmendaten in Verbindung mit der Adressinformation zu verwalten;
eine Übertragungseinheit (51), konfiguriert, die
Anwendungsidentifikationsinformation und die Adressinformation, die in Verbindung miteinander durch die Ausführungsbildrahmendaten-Verwaltungseinheit (5004) verwaltet werden, an das Kommunikationsendgerät (10) zu übertragen; und
eine Empfangseinheit (51), konfiguriert, vom Kommunikationsendgerät (10) eine Ausführungsbildrahmendaten-Anfrage zu empfangen, die die
Ausführungsbildrahmendaten bestimmt, die verwaltet werden in Verbindung mit der Adressinformation in Verbindung mit der Anwendungsidentifikationsinformation einer bestimmten Anwendung der Vielzahl von Anwendungen, die am Kommunikationsendgerät aktiviert wurde;
wobei die Übertragungseinheit (51) die Ausführungsbildrahmendaten an das Kommunikationsendgerät (10) überträgt, die in der von der Empfangseinheit (51) empfangenen Ausführungsbildrahmendaten-Anfrage bestimmt wurden.

2. Kommunikationssystem (50) nach Anspruch 1, ferner umfassend:
eine Ausführungsbildinhalt-Verwaltungseinheit (5005), konfiguriert, eine Endgerätidentifikationsinformation des Kommunikationsendgeräts (10) in Verbindung mit einer Inhaltsidentifikationsinformation von Ausführungsbildinhaltsdaten, die im Ausführungsbildrahmen gezeigt werden sollen, zu verwalten;
wobei die Datenverwaltungseinheit (5002) die Ausführungsbildinhaltsdaten in Verbindung mit der Inhaltsidentifikationsinformation verwaltet;
wobei die Empfangseinheit (51) die Endgerätidentifikationsinformation des Kommunikationsendgeräts vom Kommunikationsendgerät (10) empfängt; und
wobei die Übertragungseinheit (51) die Ausführungsbildinhaltsdaten, die mit der von der Empfangseinheit (51) empfangenen Endgerätidentifikationsinformation in Verbindung stehen, an das Kommunikationsendgerät (10) überträgt.

3. Kommunikationsverwaltungssystem (50) nach Anspruch 1 oder 2, ferner umfassend:
eine Anwendungsverfügbarkeits-Verwaltungseinheit (5003), konfiguriert, eine Verfügbarkeitsinformation in Verbindung mit der Endgerätidentifikationsinformation des Kommunikationsendgeräts (10) und die Anwendungsidentifikationsinformation der Vielzahl von im Kommunikationsendgerät (10) installierten Anwendungen zu verwalten, wobei die Verfügbarkeitsinformation anzeigt, ob eine vorgegebene Anwendung der Vielzahl von Anwendungen für eine Verwendung am Kommunikationsendgerät (10) verfügbar ist;
wobei die Empfangseinheit (51) die Endgerätidentifikationsinformation des Kommunikationsendgeräts (10) vom Kommunikationsendgerät (10) empfängt; und
wobei die Übertragungseinheit (51) die Verfügbarkeitsinformation, die von der Verfügbarkeitsinformation-Verwaltungseinheit verwaltet wird, in Verbindung mit der von der Empfangseinheit (51) empfangenen Endgerätidentifikationsinformation an das Kommunikationsendgerät (10) überträgt.

4. Kommunikationsverwaltungssystem (50) nach Anspruch 3, wobei die Übertragungseinheit (51) die Adressinformation, die von der
Ausführungsbildrahmendaten-Verwaltungseinheit (5004) verwaltet wird, in Verbindung mit der Anwendungsidentifikationsinformation an das Kommunikationsendgerät (10) überträgt, die durch die Verfügbarkeitsinformation in Verbindung mit der von der Empfangseinheit (51) empfangenen Endgerätidentifikation als zur Verwendung verfügbar angezeigt wird.

5. Kommunikationsverwaltungssystem (50) nach einem der Ansprüche 1 bis 4, wobei die Vielzahl von Anwendungen mindestens eine einer Anrufanwendung zum Abhalten einer Telefonkonferenz, einer Benutzereinstellungsanwendung zum Ermöglichen eines Benutzers des Kommunikationsendgeräts (10), ein anfängliches Setup des Kommunikationsendgeräts (10) auszuführen, einer Notifikationsanwendung zum Bereitstellen für den Benutzer von Notifikationsinformationen und einer Verbindungsbestätigungsanwendung zum Bestätigen einer Verbindung des Kommunikationsendgeräts (10) umfasst.

6. Kommunikationsverwaltungssystem (50) nach einem der Ansprüche 1 bis 5, ferner umfassend:
eine Abrufeinheit (59), konfiguriert, die Anwendungsidentifikationsinformation und die Adressinformation, die von der Ausführungsbildrahmendaten-Verwaltungseinheit (5004) verwaltet werden, abzurufen;
wobei die Übertragungseinheit (51) die Anwendungsidentifikationsinformation und die Adressinformation, die von der Abrufeinheit (59) abgerufen wurden, an das Kommunikationsendgerät (10) überträgt.

7. Kommunikationsverwaltungsverfahren, ausgeführt von einem Kommunikationsverwaltungssystem, das die Kommunikation eines Kommunikationsendgeräts (10) verwaltet,
wobei das Kommunikationsverwaltungssystem (50) Folgendes umfasst:
eine Ausführungsbildrahmendaten-Verwaltungseinheit (5004), konfiguriert, Anwendungsidentifikationsinformationen einer Vielzahl von Anwendungen, die im Benutzerendgerät installiert sind, in Verbindung mit Adressinformationen innerhalb eines Kommunikationsnetzwerks (2) aus Ausführungsbildrahmendaten zu verwalten, die einen Ausführungsbildrahmen eines Ausführungsbilds darstellen, das gezeigt werden soll, wenn eine vorgegebene Anwendung der Vielzahl von Anwendungen am Kommunikationsendgerät (10) aktiviert wird;
eine Datenverwaltungseinheit (5002), konfiguriert, die
Ausführungsbildrahmendaten in Verbindung mit der Adressinformation zu verwalten;
wobei das Kommunikationsverwaltungsverfahren Folgendes umfasst:
einen Übertragungsschritt des Übertragens an das Kommunikationsendgerät (10) der Anwendungsidentifikationsinformation und der Adressinformation, die in Verbindung miteinander durch die Ausführungsbildrahmendaten-Verwaltungseinheit (5004) verwaltet werden;
einen Empfangsschritt des Empfangens vom Kommunikationsendgerät (10) einer Ausführungsbildrahmendaten-Anfrage, die die Ausführungsbildrahmendaten bestimmt, die verwaltet werden in Verbindung mit der Adressinformation in Verbindung mit der Anwendungsidentifikationsinformation einer bestimmten Anwendung der Vielzahl von Anwendungen, die am Kommunikationsendgerät (10) aktiviert wurde; und
einen Abrufschritt des Abrufens von der Datenverwaltungseinheit (5002) der Ausführungsbildrahmendaten, die in der im Empfangsschritt empfangenen Ausführungsbildrahmendaten-Anfrage bestimmt wurden;
wobei der Übertragungsschritt das Übertragen an das Kommunikationsendgerät (10) der im Abrufschritt abgerufenen Ausführungsbildrahmendaten umfasst.

8. Computerprogrammprodukt, umfassend ein computerlesbares Medium mit einem darauf aufgezeichneten Computerprogramm, das von einem Computer ausführbar ist, wobei das Computerprogramm, wenn es ausgeführt wird, bewirkt, dass der Computer die Schritte des Kommunikationsverwaltungsverfahrens nach Anspruch 7 ausführt.

## Revendications

1. Système de gestion de communications (50) qui gère la communication d'un terminal de communications (10), le système de gestion de communications (50) comprenant :
une unité de gestion de données de cadre d'image d'exécution (5004) conçue pour gérer des informations d'identification d'application d'une pluralité d'applications installées dans le terminal de communications en association avec les informations d'adresse, à l'intérieur d'un réseau de communication (2), de données de cadre d'image d'exécution représentant un cadre d'image d'exécution d'une image d'exécution à afficher lorsqu'une application donnée de la pluralité d'applications est activée au niveau du terminal de communications (10) ;
une unité de gestion de données (5002) conçue pour gérer les données de cadre d'image d'exécution en association avec les informations d'adresse ;
une unité de transmission (51) conçue pour transmettre au terminal de communications (10) les informations d'identification d'application et les informations d'adresse qui sont gérées en association les unes avec les autres par l'unité de gestion de données de cadre d'image d'exécution (5004) ; et
une unité de réception (51) conçue pour recevoir du terminal de communications (10) une demande de données de cadre d'image d'exécution désignant les données de cadre d'image d'exécution qui sont gérées en association avec les informations d'adresse associées aux informations d'identification d'application d'une application désignée de la pluralité d'applications qui a été activée au niveau du terminal de communications ;
l'unité de transmission (51) transmettant au terminal de communications (10) les données de cadre d'image d'exécution désignées dans la demande de données de cadre d'image d'exécution reçue par l'unité de réception (51).

2. Système de communications (50) selon la revendication 1, comprenant en outre :
une unité de gestion de contenu d'image d'exécution (5005) conçue pour gérer les informations d'identification de terminal du terminal de communications (10) en association avec les informations d'identification de contenu des données de contenu d'image d'exécution à afficher à l'intérieur du cadre d'image d'exécution ;
l'unité de gestion de données (5002) gérant les données de contenu d'image d'exécution en association avec les informations d'identification de contenu ;
l'unité de réception (51) recevant du terminal de communications (10) les informations d'identification de terminal du terminal de communications ; et
l'unité de transmission (51) transmettant au terminal de communications (10) les données de contenu d'image d'exécution qui sont associées aux informations d'identification de terminal reçues par l'unité de réception (51).

3. Système de gestion de communications (50) selon la revendication 1 ou 2, comprenant en outre :
une unité de gestion de disponibilité d'application (5003) conçue pour gérer les informations de disponibilité en association avec les informations d'identification de terminal du terminal de communications (10) et les informations d'identification d'application de la pluralité d'applications installées dans le terminal de communications (10), les informations de disponibilité indiquant si une application donnée de la pluralité d'applications est disponible ou non pour l'utilisation au niveau du terminal d'application (10) ;
l'unité de réception (51) recevant du terminal de communications (10) les informations d'identification de terminal du terminal de communications (10) ; et
l'unité de transmission (51) transmettant au terminal de communications (10) les informations de disponibilité qui sont gérées par l'unité de gestion d'informations de disponibilité en association avec les informations d'identification de terminal reçues par l'unité de réception (51).

4. Système de gestion de communications (50) selon la revendication 3, dans lequel l'unité de transmission (51) transmet au terminal de communications (10) les informations d'adresse gérées par l'unité de gestion de données de cadre d'image d'exécution (5004) en association avec les informations d'identification d'application qui sont indiquées comme étant disponibles pour l'utilisation par les informations de disponibilité en association avec l'identification du terminal reçue par l'unité de réception (51).

5. Système de gestion de communication (50) selon l'une quelconque des revendications 1 à 4, dans lequel la pluralité d'applications comprennent au moins un des éléments suivants : une application téléphonique pour réaliser une téléconférence, une application de réglage de l'utilisateur pour permettre à un utilisateur du terminal de communications (10) d'effectuer un réglage initial du terminal de communications (10), une application de notification permettant de fournir à l'utilisateur des informations de notification et une application de confirmation de connexion permettant de confirmer une connexion du terminal de communications (10).

6. Système de gestion de communications (50) selon l'une quelconque des revendications 1 à 5, comprenant en outre :
une unité de récupération (59) conçue pour récupérer les informations d'identification d'application et les informations d'adresse gérées par l'unité de gestion de données de cadre d'image d'exécution (5004) ;
l'unité de transmission (51) transmettant au terminal de communications (10) les informations d'identification d'application et les informations d'adresse récupérées par l'unité de récupération (59).

7. Procédé de gestion de communications mis en oeuvre par un système de gestion de communications qui gère la communication d'un terminal de communications (10),
dans lequel le système de gestion de communications (50) comprend
une unité de gestion de données de cadre d'image d'exécution (5004) conçue pour gérer des informations d'identification d'application d'une pluralité d'applications installées dans le terminal de communications en association avec les informations d'adresse, à l'intérieur d'un réseau de communication (2), des données de cadre d'image d'exécution représentant un cadre d'image d'exécution d'une image d'exécution à afficher lorsqu'une application donnée de la pluralité d'applications est activée au niveau du terminal de communications (10) ; et
une unité de gestion de données (5002) conçue pour gérer les données de cadre d'image d'exécution en association avec les informations d'adresse ;
le procédé de gestion de communications comprenant :
une étape de transmission consistant à transmettre au terminal de communications (10) les informations d'identification d'application et les informations d'adresse qui sont gérées en association les unes avec les autres par l'unité de gestion de données de cadre d'image d'exécution (5004) ;
une étape de réception consistant à recevoir du terminal de communications (10) une demande de données de cadre d'image d'exécution désignant les données de cadre d'image d'exécution qui sont gérées en association avec les informations d'adresse associées aux informations d'identification d'application d'une application désignée de la pluralité d'applications qui est activée au niveau du terminal de communications (10) ; et
une étape de récupération consistant à récupérer depuis l'unité de gestion de données (5002) les données de cadre d'image d'exécution désignées dans la demande de données de cadre d'image d'exécution reçue dans l'étape de réception ;
l'étape de transmission comprenant la transmission au terminal de communications (10) des données de cadre d'image d'exécution récupérées dans l'étape de récupération.

8. Produit de programme informatique comprenant un support lisible par ordinateur ayant un programme informatique enregistré sur celui-ci qui peut être exécuté par un ordinateur, le programme informatique, lorsqu'exécuté, amenant l'ordinateur à effectuer les étapes du procédé de gestion de communications selon la revendication 7.
